(19) Europäisches Patentamt
European Patent Office
Office européen des brevets

(11) EP 0 739 386 B1

(12) FASCICULE DE BREVET EUROPEEN

(45) Date de publication et mention de la délivrance du brevet: **11.08.1999 Bulletin 1999/32**

(21) Numéro de dépôt: **95940288.4**

(22) Date de dépôt: **08.11.1995**

(51) Int Cl.[6]: **C08L 95/00**

(86) Numéro de dépôt international: **PCT/FR95/01471**

(87) Numéro de publication internationale: **WO 96/15193 (23.05.1996 Gazette 1996/23)**

# (54) PROCEDE DE PREPARATION DE COMPOSITIONS BITUME/POLYMERE, LEUR APPLICATION

VERFAHREN ZUR HERSTELLUNG VON BITUMEN-POLYMER-ZUSAMMENSETZUNGEN UND IHRE VERWENDUNG

METHOD FOR PREPARING BITUMEN/POLYMER COMPOSITIONS, AND USE THEREOF

(84) Etats contractants désignés:
**AT BE CH DE DK ES FR GB GR IE IT LI LU MC NL PT SE**

(30) Priorité: **10.11.1994 FR 9413537**

(43) Date de publication de la demande: **30.10.1996 Bulletin 1996/44**

(73) Titulaire: **ELF AQUITAINE**
**92400 Courbevoie (FR)**

(72) Inventeurs:
- **PLANCHE, Jean-Pascal**
  **F-38540 Saint-Just-Chaleyssin (FR)**
- **LACOUR, Claude**
  **F-38200 Vienne (FR)**

(74) Mandataire: **Boillot, Marc**
**Elf Exploration Production**
**Département Propriété Industrielle**
**Tour Elf**
**EP/T/RD/DPI - Bureau 34 G 47**
**92078 Paris La Défense Cedex (FR)**

(56) Documents cités:
**EP-A- 0 360 656**
**FR-A- 2 376 188**
**FR-A- 2 429 241**
**FR-A- 2 528 439**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

L'invention concerne un procédé de préparation de compositions bitume/polymère à propriétés mécaniques améliorées. Elle se rapporte encore à l'application des compositions obtenues à la réalisation de revêtements et en particulier de revêtements superficiels routiers, d'enrobés ou encore de revêtements d'étanchéité et elle a trait également à une solution mère de polymères utilisable pour l'obtention desdites compositions.

Il est connu d'utiliser des compositions bitumineuses comme revêtements de surfaces diverses et en particulier comme enduits superficiels routiers à condition que ces compositions possèdent un certain nombre de qualités mécaniques essentielles.

Ces qualités mécaniques sont appréciées, en pratique, en déterminant, par des essais normalisés, une série de caractéristiques mécaniques, dont les plus utilisées sont les suivantes :

- point de ramollissement, exprimé en °C et déterminé par l'essai Bille et Anneau défini par la norme NF T 66 008,
- point de fragilité ou point de Fraass, exprimé en °C et déterminé selon la norme IP 80/53,
- pénétrabilité, exprimée en 1/10 de mm et déterminée selon la norme NF T 66 004,
- caractéristiques rhéologiques en traction déterminées selon la norme NF T 46 002 et comportant les grandeurs :
  - . contrainte au seuil $\nabla s$ en bars,
  - . allongement au seuil $\varepsilon s$ en %,
  - . contrainte à la rupture $\nabla r$ en bars,
  - . allongement à la rupture $\varepsilon r$ en %.

On peut également obtenir une indication de la susceptibilité thermique des compositions bitumineuses à partir d'une corrélation entre la pénétrabilité (en abrégé pen) et le point de ramollissement (en abrégé TBA) desdites compositions connue sous le nom d'indice de PFEIFFER (en abrégé IP).

Cet indice se calcule par la relation :

$$IP = \frac{20 - 500\ A}{1 + 50\ A}$$

dans laquelle A est la pente de la droite représentée par l'équation :

$$A = \frac{\log_{10} 800 - \log_{10} pen}{TBA - 25}$$

La susceptibilité thermique de la composition bitumineuse est d'autant plus faible que la valeur de l'indice de PFEIFFER est plus grande ou, ce qui revient au même, que la valeur de la grandeur A est plus faible. Pour les bitumes classiques l'indice de PFEIFFER prend des valeurs se situant aux alentours de zéro.

En général, les bitumes conventionnels ne présentent pas simultanément l'ensemble des qualités requises et l'on sait depuis longtemps que l'addition de polymères variés à ces bitumes conventionnels permet de modifier favorablement les propriétés mécaniques de ces derniers et de former des compositions bitume-polymère ayant des qualités mécaniques améliorées par rapport à celles des bitumes seuls.

Les polymères susceptibles d'être ajoutés aux bitumes sont le plus souvent des élastomères tels que polyisoprène, caoutchouc butyle, polybutène, polyisobutène, copolymères éthylène/acétate de vinyle, polyméthacrylate, polychloroprène, terpolymère éthylène/propylène/diène (EPDM), polynorbornène, ou encore copolymères statistiques ou séquencés de styrène et d'un diène conjugué.

Parmi les polymères ajoutés aux bitumes, les copolymères statistiques ou séquences de styrène et d'un diène conjugué et notamment de styrène et de butadiène ou de styrène et d'isoprène sont particulièrement efficaces car ils se dissolvent très facilement dans les bitumes et leur confèrent d'excellentes propriétés mécaniques et dynamiques et notamment de très bonnes propriétés de viscoélasticité.

On sait encore que la stabilité des compositions bitume-polymère peut être améliorée par couplage chimique du polymère au bitume, cette amélioration permettant en outre d'élargir le domaine d'utilisation des compositions bitume-polymère.

Des compositions bitume-polymère pour lesquelles un copolymère statistique ou séquencé de styrène et d'un diène conjugué tel que butadiène ou isoprène est couplé au bitume peuvent être préparées en faisant appel aux procédés décrits dans les citations FR-A-2376188, FR-A-2429241, FR-A-2528439 et EP-A-0360656. Dans ces procédés, on incorpore ledit copolymère et une source de soufre au bitume, en opérant entre 130 °C et 230 °C et sous

agitation, puis l'on maintient le mélange ainsi formé sous agitation et à une température entre 130 °C et 230 °C pendant au moins quinze minutes. La source de soufre consiste en soufre chimiquement non lié (FR-A-2376188 et FR-A-2429241), en un polysulfure (FR-A-2528439) ou en un accélérateur de vulcanisation donneur de soufre utilisé seul ou en association avec du soufre chimiquement non lié et/ou un polysulfure ou un accélérateur de vulcanisation non donneur de soufre (EP-A-0360656) et l'incorporation du copolymère et de la source de soufre au bitume est réalisée soit par addition directe desdits ingrédients au bitume (FR-A-2376188, FR-A-2528439 et EP-A-0360656) ou bien en préparant tout d'abord une solution mère du copolymère et de la source de soufre dans une huile hydrocarbonée, puis en ajoutant ladite solution mère au bitume (FR-A-2429241, FR-A-2528439 et EP-A-0360656).

On a maintenant trouvé que l'on pouvait encore améliorer substantiellement, entre autres, la consistance (augmentation du point de ramollissement Bille et Anneau), la susceptibilité thermique (augmentation de l'indice de PFEIFFER) et les propriétés mécaniques en traction des compositions bitume/polymère pour lesquelles un élastomère réticulable au soufre, en particulier un copolymère séquencé de styrène et d'un diène conjugué tel que butadiène ou isoprène, est couplé au bitume sous l'action d'un agent de couplage donneur de soufre, si l'on incorporait une polyoléfine fonctionnalisée particulière au milieu réactionnel donnant naissance à ces compositions.

L'invention a donc pour objet un procédé de préparation de compositions bitume/polymère à propriétés mécaniques améliorées, ledit procédé étant du type dans lequel on met en contact, en opérant à des températures comprises entre 100 °C et 230 °C et sous agitation pendant une durée d'au moins 10 minutes, un bitume ou mélange de bitumes avec, comptés en poids du bitume, entre 0,3 % et 20 % et, de préférence 0,5 % à 10 % d'un élastomère réticulable au soufre et un agent de couplage donneur de soufre en quantité propre à fournir une quantité de soufre libre représentant 0,1 % à 20 % et de préférence 0,5 % à 10 % du poids de polymère réticulable au soufre dans le milieu réactionnel renfermant les ingrédients bitume, élastomère et agent de couplage et se caractérisant en ce que, lors de ladite mise en contact, le milieu réactionnel contient également, en poids du bitume, 0,05 % à 15 % et de préférence 0,10 % à 10 % d'un adjuvant polymère consistant en un ou plusieurs polymères oléfiniques fonctionnalisés choisis parmi les copolymères renfermant, en poids, x % de motifs issus de l'éthylène ou du propylène, y % de motifs issus d'un ou plusieurs monomères A de formule

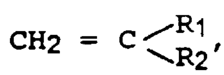

z % de motifs issus d'au moins un monomère B de formule

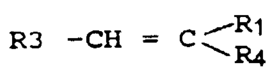

et v % de motifs issus d'un ou plusieurs monomères C différents des monomères A et B, avec, dans ces formules, $R_1$ désignant H, $CH_3$ ou $C_2H_5$, $R_2$ représentant un radical $-COOR_5$, $-OR_5$ ou $-OOCR_6$ avec $R_5$ désignant un radical alkyle en $C_1$ à $C_{10}$ et de préférence en $C_1$ à $C_6$ et $R_6$ représentant H ou un radical alkyle en $C_1$ à $C_3$, $R_3$ désignant H, COOH ou $COOR_5$, $R_5$ ayant la définition précitée, et R4 désignant un radical -COOH, -OH,

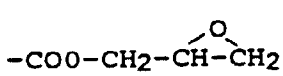 ou 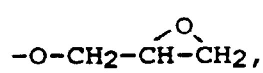

et x, y, z et v étant des nombres tels que $40 \leq x \leq 99{,}7$, $0 \leq y \leq 50$, $0 \leq z \leq 20$ et $0 \leq v \leq 15$ avec $y + z \geq 0{,}3$ et $x + y + z + v = 100$.

De préférence, dans les copolymères précités x, y, z, et v sont tels que $50 \leq x \leq 99{,}5$, $0 \leq y \leq 40$, $0 \leq z \leq 15$ et $0 \leq v \leq 10$ avec $y + z \geq 0{,}5$ et $x + y + z + v = 100$.

Les monomères A de formule

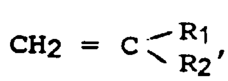

qui fournissent dans le copolymère oléfinique des motifs

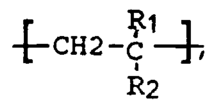

sont en particulier choisis parmi le formiate de vinyle, l'acétate de vinyle, le propionate de vinyle, le butyrate de vinyle, les éthers de vinyle $CH_2$= CH-O-$R_5$ où $R_5$ est un radical alkyle en $C_1$ à $C_{10}$ et de préférence en $C_1$ à $C_6$ tel que méthyle, éthyle, propyle, butyle, les acrylates et méthacrylates d'alkyle respectivement de formule $CH_2$ = CH-COO$R_5$ et

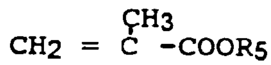

où $R_5$ a la signification donnée ci-dessus.

Les monomères B de formule

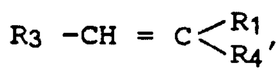

qui fournissent dans le copolymère oléfinique des motifs

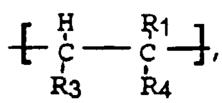

sont en particulier choisis parmi l'acide maléique et son anhydride, l'acide acrylique, l'acide méthacrylique, les maléates acides d'alkyle de formule HOOC-CH = CH-COO$R_7$ où $R_7$ est un radical alkyle en $C_1$ à $C_6$ tel que méthyle, éthyle, propyle, butyle, les acrylates et méthacrylates de glycidyle de formule

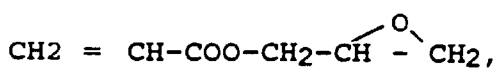

et

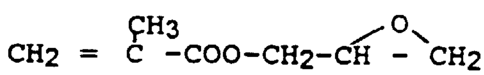

respectivement, l'alcool vinylique et le vinyléther de glycidyle de formule

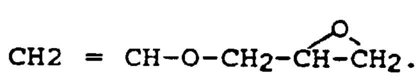

Les monomères C dont la présence dans le copolymère oléfinique est facultative, sont des monomères polymérisables par voie radicalaire différents des monomères A et B, comme, par exemple, CO, $SO_2$ et acrylonitrile.

Avantageusement, les copolymères oléfiniques susceptibles de constituer l'adjuvant polymère sont choisis parmi :

(a) les copolymères statistiques d'éthylène et d'acétate de vinyle et les copolymères statistiques d'éthylène et d'acrylate ou de méthacrylate d'alkyle à reste alkyle en $C_1$ à $C_6$ tel que méthyle, éthyle, propyle, butyle, hexyle, qui renferment, en poids, 40 % à 99,7 % et de préférence 50 % à 99 % d'éthylène ;

(b) les copolymères statistiques d'éthylène et d'un monomère B choisi parmi l'acide acrylique, l'acide méthacrylique, l'acide maléique ou son anhydride, l'acrylate de glycidyle et le méthacrylate de glycidyle, qui renferment, en poids, 80 % à 99,7 % et de préférence 85 % à 99,5 % d'éthylène ;

(c) les terpolymères statistiques d'éthylène, d'un monomère A choisi parmi l'acétate de vinyle et les acrylates ou méthacrylates d'alkyle à reste alkyle en $C_1$ à $C_6$ tel que méthyle, éthyle, propyle, butyle, hexyle, et d'un monomère B choisi parmi l'acide acrylique, l'acide méthacrylique, l'acide maléique ou son anhydride, l'acrylate de glycidyle et le méthacrylate de glycidyle, qui renferment, en poids, 0,5 % à 40 % de motifs issus du monomère A et 0,5 % à 15 % de motifs issus du monomère B, le reste étant formé de motifs issus de l'éthylène ; et

(d) les copolymères résultant du greffage d'un monomère B choisi parmi l'acide acrylique, l'acide méthacrylique, l'acide maléique ou son anhydride, l'acrylate de glycidyle et le méthacrylate de glycidyle, sur un substrat consistant en un polymère choisi parmi les polyéthylènes, notamment polyéthylènes basse densité, les polypropylènes et les copolymères statistiques définis sous (a), lesdits copolymères greffés renfermant, en poids, 0,5 % à 15 % de motifs greffés issus du monomère B.

Sont particulièrement préférés, pour constituer l'adjuvant polymère, les copolymères oléfiniques choisis parmi :

(i) les terpolymères statistiques d'éthylène, d'acrylate ou méthacrylate d'alkyle à reste alkyle en $C_1$ à $C_6$ tel que méthyle, éthyle, butyle, et d'anhydride maléique, qui renferment, en poids, 0,5 % à 40 % de motifs issus d'acrylate ou méthacrylate d'alkyle et 0,5 % à 15 % de motifs issus de l'anhydride maléique, le reste étant formé de motifs issus de l'éthylène ;

(il) les terpolymères statistiques d'éthylène, d'acrylate ou méthacrylate d'alkyle à reste alkyle en $C_1$ à $C_6$ tel que méthyle, éthyle, butyle, et d'acrylate ou méthacrylate de glycidyle, qui renferment, en poids, 0,5 % à 40 % de motifs issus d'acrylate ou méthacrylate d'alkyle et 0,5 % à 15 % de motifs issus d'acrylate ou méthacrylate de glycidyle, le reste étant formé de motifs issus de l'éthylène ;

(iii) les polyéthylènes basse densité greffés anhydride maléique et les polypropylènes greffés anhydride maléique, qui renferment, en poids, 0,5 % à 15 % de motifs greffés issus de l'anhydride maléique.

Selon l'invention, on peut constituer l'adjuvant polymère en associant un copolymère oléfinique du type précité comportant des motifs à groupements fonctionnels COOH ou OH et un copolymère oléfinique du type précité comportant des motifs à groupements fonctionnels glycidyles.

Avantageusement, les copolymères oléfiniques utilisés pour constituer l'adjuvant polymère ont des masses moléculaires telles que l'indice de fluidité desdits copolymères, déterminé selon la norme ASTM D 1238 (essai réalisé à 190°C sous une charge de 2,16 kg), ait une valeur, exprimée en g par 10 minutes, comprise entre 0,3 et 3000 et de préférence entre 0,5 et 900.

Le bitume ou mélange de bitumes, que l'on utilise dans la préparation des compositions bitume/polymère, est choisi avantageusement parmi les divers bitumes qui possèdent une viscosité cinématique à 100 °C comprise entre 0,5 x $10^{-4}m^2/s$ et 3 x $10^{-2}$ $m^2/s$ et de préférence entre 1 x $10^{-4}m^2/s$ et 2 x $10^{-2}m^2/s$. Ces bitumes peuvent être des bitumes de distillation directe ou de distillation sous pression réduite ou encore des bitumes soufflés ou semi-soufflés, voire même certaines coupes pétrolières ou des mélanges de bitumes et de distillats sous vide. Avantageusement, le bitume ou mélange de bitumes utilisé pour l'obtention des compositions selon l'invention, outre une viscosité cinématique comprise dans les intervalles précités, présente une pénétrabilité à 25°C, définie suivant la norme NF T 66004, comprise entre 5 et 800 et de préférence entre 10 et 400.

L'élastomère réticulable au soufre, que l'on utilise pour préparer les compositions bitume/polymère et que l'on retrouve réticulé dans lesdites compositions, peut être tel que polyisoprène, polynorbornène, polybutadiène, caoutchouc butyle, terpolymère éthylène/propylène/diène (EPDM). Avantageusement, ledit élastomère est choisi parmi les copolymères statistiques ou séquencés de styrène et d'un diène conjugué tel que butadiène, isoprène, chloroprène, butadiène carboxylé, isoprène carboxylé, et plus particulièrement consiste en un ou plusieurs copolymères choisis parmi les copolymères séquencés, avec ou sans charnière statistique, de styrène et de butadiène, de styrène et d'isoprène, de styrène et de chloroprène, de styrène et de butadiène carboxylé ou encore de styrène et d'isoprène carboxylé. Le copolymère de styrène et de diène conjugué, et en particulier chacun des copolymères précités, possède avantageusement une teneur pondérale en styrène allant de 5 % à 50 %. La masse moléculaire moyenne en poids du copolymère de styrène et de diène conjugué, et notamment celle des copolymères mentionnés ci-dessus, peut être comprise, par exemple, entre 10 000 et 600 000 daltons et se situe de préférence entre 30 000 et 400 000 daltons. De préférence, le copolymère de styrène et de diène conjugué est choisi parmi les copolymères di- ou triséquencés de styrène et de butadiène, de styrène et d'isoprène, de styrène et de butadiène carboxylé ou encore de styrène et d'isoprène carboxylé qui ont des teneurs en styrène et des masses moléculaires moyennes en poids situées dans les intervalles définis précédemment.

L'agent de couplage donneur de soufre, que l'on utilise dans la préparation des compositions bitume/polymère selon l'invention, peut consister en un produit choisi dans le groupe formé par le soufre élémentaire, les polysulfures d'hydrocarbyle, les accélérateurs de vulcanisation donneurs de soufre, les mélanges de tels produits entre eux ou/et

avec des accélérateurs de vulcanisation non donneurs de soufre. En particulier, l'agent de couplage donneur de soufre est choisi parmi les produits M, qui renferment, en poids, de 0 à 100 % d'une composante CA consistant en un ou plusieurs accélérateurs de vulcanisation donneurs de soufre et de 100 % et 0 % d'une composante CB consistant en un ou plusieurs agents de vulcanisation choisis parmi le soufre élémentaire et les polysulfures d'hydrocarbyle, et les produits N, qui renferment une composante CC consistant en un ou plusieurs accélérateurs de vulcanisation non donneurs de soufre et un produit M dans un rapport pondéral de la composante CC au produit M allant de 0,01 à 1 et de préférence de 0,05 à 0,5.

Le soufre élémentaire susceptible d'être utilisé pour constituer, en partie ou en totalité, l'agent de couplage est avantageusement du soufre en fleur et de préférence du soufre cristallisé sous la forme orthorhombique et connu sous le nom de soufre alpha.

Les polysulfures d'hydrocarbyle susceptibles d'être employés pour former une partie ou la totalité de l'agent de couplage peuvent être choisis parmi ceux qui sont définis dans la citation FR-A-2528439 et qui répondent à la formule générale

$$R_8 - (S)_m - ( - R_9 - (S)_m )_w - R_{10}$$

dans laquelle $R_8$ et $R_{10}$ désignent chacun un radical hydrocarboné monovalent, saturé ou insaturé, en $C_1$ à $C_{20}$ ou sont reliés entre eux pour constituer un radical hydrocarboné divalent en $C_1$ à $C_{20}$, saturé ou insaturé, formant un cycle avec les autres groupements d'atomes associés dans la formule, $R_9$ est un radical hydrocarboné divalent, saturé ou insaturé, en Ci à $C_{20}$, les $-(S)_m-$ représentent des groupements divalents formés chacun de m atomes de soufre, les m pouvant être différents de l'un desdits groupements à l'autre et désignant des nombres entiers allant de 1 à 6 avec au moins l'un des m égal ou supérieur à 2 et w représente un nombre entier prenant les valeurs de zéro à 10. Des polysulfures préférés répondent à la formule $R_{11} - (S)_p - R_{11}$, dans laquelle $R_{11}$ désigne un radical alkyle en $C_6$ à $C_{16}$, par exemple hexyle, octyle, dodécyle, tertiododécyle, hexadécyle, nonyle, décyle, et $-(S)_p-$ représente un groupement divalent formé par un enchaînement de p atomes de soufre, p étant un nombre entier allant de 2 à 5.

Lorsque l'agent de couplage renferme un accélérateur de vulcanisation donneur de soufre, ce dernier peut être choisi, en particulier, parmi les polysulfures de thiurame de formule

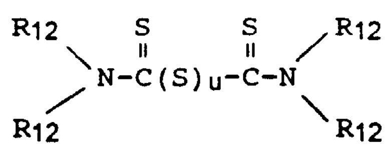

dans laquelle les $R_{12}$, identiques ou différents, représentent chacun un radical hydrocarboné en $C_1$ à $C_{12}$ et de préférence en $C_1$ à $C_8$, notamment radical alkyle, cycloalkyle ou aryle, ou bien deux radicaux $R_{12}$ fixés à un même atome d'azote sont reliés entre eux pour former un radical divalent hydrocarboné en $C_2$ à $C_8$ et u est un nombre allant de 2 à 8. Comme exemples de tels accélérateurs de vulcanisation on peut citer notamment les composés disulfure de dipentaméthylène thiurame, tétrasulfure de dipentaméthylène thiurame, hexasulfure de dipentaméthylènethiurame, disulfure de tétrabutylthiurame, disulfure de tétraéthylthiurame et disulfure de tétraméthylthiurame.

Comme autres exemples d'accélérateurs de vulcanisation donneurs de soufre, on peut encore citer les disulfures d'alkylphénols et les disulfures tels que disulfure de morpholine et N,N'- disulfure de caprolactame.

Les accélérateurs de vulcanisation non donneurs de soufre utilisables pour former la composante CC des agents de couplage de type produit N peuvent être des composés soufrés choisis notamment parmi le mercaptobenzothiazole et ses dérivés, notamment benzothiazole thiolates métalliques et surtout benzothiazolesulfénamides, les dithiocarbamates de formule

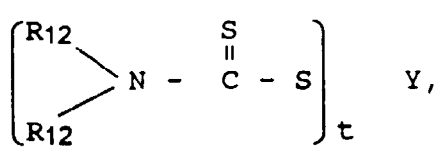

dans laquelle les $R_{12}$, identiques ou différents, ont la signification donnée plus haut, Y représente un métal et t désigne la valence de Y, et les monosulfures de thiurame de formule

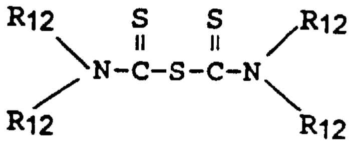

dans laquelle les $R_{12}$ ont la signification donnée plus haut.

Des exemples d'accélérateurs de vulcanisation du type des mercaptobenzothiazoles peuvent être tels que mercaptobenzothiazole, benzothiazole thiolate d'un métal tel que zinc, sodium, cuivre, disulfure de benzothiazyle, 2-benzothiazolepentaméthylènesulfénamide, 2-benzothiazolethiosulfénamide, 2-benzothiazoledihydrocarbylsulfénamides pour lesquelles le radical hydrocarbyle est un radical éthyle, isopropyle, tertiobutyle, cyclohexyle, et N-oxydiéthylène 2-benzothiazolesulfénamide.

Parmi les accélérateurs de vulcanisation du type des dithiocarbamates de formule précitée, on peut citer les composés diméthyldithiocarbamates de métaux tels que cuivre, zinc, plomb, bismuth et sélénium, diéthyldithiocarbamates de métaux tels que cadmium et zinc, diamyldithiocarbamates de métaux tels que cadmium, zinc et plomb et pentaméthylènedithiocarbamate de plomb ou zinc.

A titre d'exemples de monosulfures de thiurame ayant la formule donnée plus haut, on peut citer les composés tels que monosulfure de dipentaméthylènethiurame, monosulfure de tétraméthylthiurame, monosulfure de tétraéthylthiurame et monosulfure de tétrabutylthiurame.

D'autres accélérateurs de vulcanisation non donneurs de soufre, qui n'appartiennent pas aux familles définies plus haut, peuvent être également utilisés. De tels accélérateurs de vulcanisation peuvent être tels que diphényl-1,3 guanidine, diorthotolylguanidine et oxyde de zinc, ce dernier composé étant utilisé éventuellement en présence d'acide gras.

Pour plus de détails sur les accélérateurs de vulcanisation donneurs de soufre et non donneurs de soufre utilisables dans la constitution de l'agent de couplage, on peut se référer aux citations EP-A-0360656 et EP-A-0409683, dont le contenu est incorporé à la présente description par référence, de même que le contenu de la citation FR-A-2528439.

De par sa composition, comme indiqué plus haut, l'agent de couplage peut être du type monocomposante ou du type multicomposante, l'agent de couplage du type multicomposante pouvant être formé préalablement à son utilisation ou encore produit in situ dans le milieu dans lequel il doit être présent. L'agent de couplage du type multicomposante préformé ou du type monocomposante ou les composantes de l'agent de couplage du type multicomposante formé in situ peuvent être mis en oeuvre tels quels, par exemple à l'état fondu, ou bien en mélange, par exemple en solution ou en suspension, avec un diluant, par exemple un composé hydrocarboné.

Le milieu réactionnel donnant naissance aux compositions bitume/polymère peut être formé en réalisant tout d'abord un mélange renfermant le bitume ou mélange de bitumes et l'élastomère réticulable au soufre, puis en incorporant à ce mélange l'agent de couplage et, simultanément ou subséquemment, l'adjuvant polymère. Toutefois, selon un mode de réalisation préféré, le milieu réactionnel donnant naissance aux compositions bitume/polymère est formé en réalisant un mélange renfermant le bitume ou mélange de bitumes, l'élastomère réticulable au soufre et l'adjuvant polymère, puis en incorporant l'agent de couplage donneur de soufre au mélange obtenu.

Ce mode de réalisation préféré est avantageusement mis en oeuvre en mettant tout d'abord en contact l'élastomère réticulable au soufre et l'adjuvant polymère avec le bitume ou mélange de bitumes, en utilisant des proportions d'élastomère et d'adjuvant polymère ayant des valeurs, par rapport au bitume, choisies dans les intervalles définis précédemment pour ces proportions, en opérant à des températures comprises entre 100 °C et 230 °C, plus particulièrement entre 120 °C et 190 °C, et sous agitation, pendant une durée suffisante, généralement de l'ordre de quelques dizaines de minutes à quelques heures et, par exemple, de l'ordre de 30 minutes à 8 heures, pour former un mélange homogène, puis en incorporant au dit mélange l'agent de couplage donneur de soufre, en quantité appropriée choisie dans les intervalles définis précédemment pour ladite quantité, et en maintenant le tout sous agitation à des températures comprises entre 100 °C et 230 °C, plus particulièrement entre 120 °C et 190 °C, et identiques ou non aux températures de mélange de l'élastomère réticulable au soufre et de l'adjuvant polymère avec le bitume ou mélange de bitumes, pendant une durée au moins égale à 10 minutes et généralement allant de 10 minutes à 5 heures, plus particulièrement de 30 minutes à 180 minutes, pour former un produit de réaction constituant la composition bitume/polymère.

Dans la mise en oeuvre préférée donnée ci-dessus, l'adjuvant polymère peut être incorporé au bitume ou mélange de bitumes avant ou après l'élastomère réticulable au soufre, une incorporation simultanée pouvant être également envisagée.

Le milieu réactionnel à base de bitume ou mélange de bitumes, d'élastomère réticulable au soufre, d'adjuvant polymère et d'agent de couplage donneur de soufre, qui donne naissance aux compositions bitume/polymère, peut

encore renfermer un ou plusieurs additifs susceptibles de réagir avec les groupements fonctionnels du copolymère ou des copolymères constituant l'adjuvant polymère. Ces additifs réactifs peuvent être en particulier des amines, notamment polyamines, primaires ou secondaires, des alcools, notamment polyols, des acides, notamment polyacides, ou encore des sels métalliques.

Des additifs réactifs du type amine sont, par exemple, des diamines aromatiques telles que diamino-1,4 benzène, diamino-2, 4 toluène, diaminonaphtalène, bis(amino-4 phényl) sulfone, bis (amino-4 phényl) éther, bis (amino-4 phényl) méthane, des diamines aliphatiques ou cycloaliphatiques telles que celles de formule $H_2N$ - $R_{13}$ - $NH_2$ où $R_{13}$ désigne un radical alkylène en $C_2$ à $C_{12}$ ou cycloalkylène en $C_6$ à $C_{12}$, par exemple éthylènediamine, diaminopropane, diaminobutane, diaminohexane, diaminooctane, diaminodécane, diaminododécane, diaminocyclohexane, diaminocyclooctane, diaminocyclododécane, des polyéthylènepolyamines ou polypropylènepolyamines telles que diéthylènetriamine, triéthylènetétramine, tétraéthylènepentamine, dipropylènetriamine, ou encore des amines ou polyamines grasses, c'est-à-dire des amines ou polyamines renfermant un radical alkyl ou alkényl en $C_{12}$ à $C_{18}$ relié à l'atome d'azote d'un groupement amine.

Des additifs réactifs du type alcool sont, en particulier, des polyols tels que diols ou triols et notamment des diols de formule HO - $R_{14}$ - OH, où $R_{14}$ désigne un radical hydrocarboné, notamment un radical alkylène en $C_2$ à $C_{18}$, arylène en $C_6$ à $C_8$ et cycloalkylène en $C_6$ à $C_8$, et des polyétherdiols de formule HO $[C_q H_{2q} O]_r H$ où q est un nombre allant de 2 à 6 et notamment égal à 2 ou 3 et r est un nombre au moins égal à 2 et par exemple allant de 2 à 20. Des exemples de tels polyols sont tels que éthylène glycol, propylène glycol, butylène glycol, diéthylène glycol, triéthylène glycol, tétraéthylène glycol, hexanediol, octane diol, polybutadiène polyhydroxylé.

Des additifs réactifs du type acide sont, en particulier, des polyacides de formule HOOC - $R_{14}$ - COOH, où $R_{14}$ a la signification donnée plus haut. Des exemples de tels polyacides sont tels que acide phtalique, acide téréphtalique, acide malonique, acide succinique, acide adipique, acide glutarique, polybutadiène polycarboxylé.

Des additifs réactifs du type sel métallique sont, en particulier, des composés tels que hydroxydes, oxydes, alcoolates, carboxylates comme formiates et acétates, méthoxydes, éthoxydes, nitrites, carbonates et bicarbonates de métaux des groupes I, II, III et VIII du Tableau Périodique des Eléments, notamment Na, K, Li, Mg, Ca, Cd, Zn, Ba, Al, Fe.

La quantité de l'additif réactif ou des additifs réactifs, que l'on incorpore au milieu réactionnel donnant naissance aux compositions bitume/polymère, peut aller de 0,01 % à 10 % et plus particulièrement de 0,05 % à 5 % du poids de bitume présent dans ledit milieu réactionnel.

Le milieu réactionnel donnant naissance aux compositions bitume/polymère peut être encore additionné de 1 % à 40 % et plus particulièrement de 2 % à 30 %, en poids du bitume, d'un agent fluxant, qui peut consister, notamment, en une huile hydrocarbonée présentant un intervalle de distillation à pression atmosphérique déterminé selon la norme ASTM D 86-67, compris entre 100 °C et 600 °C et situé plus spécialement entre 150 °C et 400 °C. Cette huile hydrocarbonée, qui peut être notamment une coupe pétrolière de caractère aromatique, une coupe pétrolière de caractère naphthéno-aromatique, une coupe pétrolière de caractère naphténo-paraffinique, une coupe pétrolière de caractère paraffinique, une huile de houille ou encore une huile d'origine végétale, est suffisamment "lourde" pour limiter l'évaporation au moment de son addition au bitume et en même temps suffisamment "légère" pour être éliminée au maximum après répandage de la composition bitume-polymère la contenant, de manière à retrouver les mêmes propriétés mécaniques qu'aurait présentées, après répandage à chaud, la composition bitume-polymère préparée sans utiliser d'agent fluxant. L'agent fluxant peut être ajouté au milieu réactionnel à un moment quelconque de la constitution dudit milieu, la quantité d'agent fluxant étant choisie dans les intervalles définis plus haut, pour être compatible avec l'usage final désiré sur le chantier.

Outre les additifs réactifs et l'agent de fluxage, on peut encore incorporer au milieu réactionnel générant les compositions bitume/polymère, à un moment quelconque de la constitution dudit milieu réactionnel, des additifs conventionnellement utilisés dans les compositions bitume/polymère tels que des promoteurs d'adhésion de la composition bitume/polymère aux surfaces minérales ou encore des charges comme le talc, le noir de carbone, les pneus usagés réduits en poudrette.

Dans une forme de mise en oeuvre du procédé selon l'invention, utilisant une huile hydrocarbonée telle que définie plus haut, à titre d'agent fluxant, l'élastomère réticulable au soufre, l'adjuvant polymère et l'agent de couplage sont incorporés au bitume sous la forme d'une solution mère de ces produits dans l'huile hydrocarbonée constituant l'agent fluxant.

La solution mère est préparée par mise en contact des ingrédients la composant, à savoir huile hydrocarbonée servant de solvant, élastomère réticulable au soufre, adjuvant polymère et agent de couplage, sous agitation, à des températures comprises entre 10 °C et 170 °C et plus particulièrement entre 40 °C et 120 °C, pendant une durée suffisante, par exemple d'environ 30 minutes à environ 90 minutes, pour obtenir une dissolution complète de l'élastomère réticulable au soufre, de l'adjuvant polymère et de l'agent de couplage dans l'huile hydrocarbonée.

Les concentrations respectives de l'élastomère réticulable au soufre, de l'adjuvant polymère et de l'agent de couplage dans la solution mère peuvent varier assez largement en fonction, notamment, de la nature de l'huile hydrocarbonée utilisée pour dissoudre l'élastomère réticulable au soufre, l'adjuvant polymère et l'agent de couplage. Ainsi les quantités respectives d'élastomère réticulable au soufre, d'adjuvant polymère et d'agent de couplage peuvent représenter avantageusement 5 % à 30 %, 1 % à 20 % et 0,005 % à 6 % du poids de l'huile hydrocarbonée.

Pour préparer les compositions bitume/polymère suivant l'invention en faisant appel à la technique de la solution mère, on mélange la solution mère renfermant l'élastomère réticulable au soufre, l'adjuvant polymère et l'agent de couplage, avec le bitume ou mélange de bitumes, en opérant à des températures comprises entre 100 °C et 230 °C, plus particulièrement entre 120 °C et 190 °C, et sous agitation, ceci étant réalisé, par exemple, en incorporant la solution mère au bitume maintenu sous agitation aux températures entre 100 °C et 230 °C et plus particulièrement entre 120 °C et 190 °C, puis on maintient le mélange résultant sous agitation à des températures comprises entre 100 °C et 230 °C, plus particulièrement entre 120 °C et 190 °C, par exemple aux températures utilisées pour réaliser le mélange de la solution mère avec le bitume, pendant une durée au moins égale à 10 minutes, et généralement allant de 10 minutes à 90 minutes, pour former un produit de réaction constituant la composition bitume/polymère.

La quantité de solution mère mélangée au bitume est choisie pour fournir les quantités désirées, par rapport au bitume, d'élastomère réticulable au soufre, d'adjuvant polymère et d'agent de couplage, lesdites quantités étant dans les fourchettes définies précédemment.

Les compositions bitume/polymère obtenues par le procédé selon l'invention peuvent être utilisées telles quelles ou bien diluées avec des proportions variables d'un bitume ou mélange de bitumes ou d'une composition selon l'invention ayant des caractéristiques différentes pour constituer des liants bitume/polymère ayant des teneurs choisies respectivement en élastomère réticulé et en adjuvant polymère. Ces teneurs peuvent être soit égales (compositions non diluées) ou inférieures (compositions diluées) aux teneurs respectives en élastomère réticulé et en adjuvant polymère des compositions bitume/polymère initiales correspondantes. La dilution des compositions bitume/polymère selon l'invention avec le bitume ou mélange de bitumes ou avec une composition selon l'invention de caractéristiques différentes peut être réalisée soit directement à la suite de l'obtention desdites compositions, lorsqu'une utilisation quasi immédiate des liants bitume/polymère résultants est requise, ou bien encore après une durée de stockage plus ou moins prolongée des compositions bitume/polymère, lorsqu'une utilisation différée des liants bitume/polymère résultants est envisagée. Le bitume ou mélange de bitumes utilisé pour la dilution d'une composition bitume/polymère selon l'invention peut être choisi parmi les bitumes définis précédemment comme convenant à la préparation des compositions bitume/polymère.

La dilution d'une composition bitume/polymère selon l'invention par un bitume ou mélange de bitumes ou par une seconde composition selon l'invention à teneurs plus faibles en élastomère réticulé et en adjuvant polymère, pour former un liant bitume/polymère à teneurs choisies en élastomère réticulé et en adjuvant polymère inférieures à celles de la composition bitume/polymère à diluer, est généralement réalisée en mettant au contact, sous agitation et à des températures comprises entre 100 °C et 230 °C et plus particulièrement entre 120 °C et 190 °C, des proportions convenables de la composition bitume/polymère à diluer et de bitume ou mélange de bitumes ou de seconde composition bitume/polymère selon l'invention.

Les liants bitume/polymère consistant en les compositions bitume/polymère selon l'invention ou résultant de la dilution desdites compositions, par un bitume ou mélange de bitumes ou par une autre composition bitume/polymère selon l'invention, jusqu'aux teneurs désirées respectivement en élastomère réticulé et en adjuvant polymère dans lesdits liants, sont applicables, directement ou après mise en émulsion aqueuse, à la réalisation de revêtements routiers du type enduit superficiel, à la production d'enrobés mis en place à chaud ou à froid, ou encore à la réalisation de revêtements d'étanchéité.

L'invention est illustrée par les exemples suivants donnés à titre non limitatif.

Dans ces exemples, les quantités et pourcentages sont exprimés en poids sauf indication contraire.

En outre, les caractéristiques rhéologiques et mécaniques des bitumes ou des compositions bitume/polymère auxquelles on fait référence dans lesdits exemples, à savoir pénétrabilité, point de ramollissement Bille et Anneau, indice de PFEIFFER et caractéristiques rhéologiques par traction, sont celles définies précédemment.

EXEMPLES 1 à 8 :

On préparait des compositions bitume/polymère témoins (exemples 1, 2, 5 et 7) et des compositions bitume/polymère selon l'invention (exemples 3, 4, 6 et 8), pour en évaluer et comparer les caractéristiques physicomécaniques.

On opérait dans les conditions suivantes :

. Exemple 1 (témoin) : Préparation d'une composition bitume/ polymère renfermant un élastomère réticulé au soufre et exempte d'adjuvant polymère.

Dans un réacteur maintenu à 175 °C et sous agitation, on introduisait 974,2 parties d'un bitume ayant une pénétrabilité à 25°C, déterminée selon les modalités de la norme NF T 66004, égale à 68 et 25 parties d'un copolymère

séquencé de styrène et de butadiène ayant une masse moléculaire moyenne en poids égale à 100 000 daltons et renfermant 25 % de styrène. Après 2,5 heures de mélange sous agitation à 175 °C, on obtenait une masse homogène.
A la masse homogène précitée, maintenue à 175 °C, on ajoutait alors 0,8 partie de soufre cristallisé et on agitait encore l'ensemble à ladite température pendant 3 heures pour former une composition bitume/polymère témoin réticulée.

. Exemple 2 (témoin) : Préparation d'une composition bitume/ polymère renfermant un adjuvant polymère et exempte d'élastomère réticulé au soufre.

Dans un réacteur maintenu à 175 °C et sous agitation, on introduisait 975 parties du bitume utilisé dans l'exemple 1 et 25 parties d'un adjuvant polymère consistant en un terpolymère éthylène/acrylate d'éthyle/méthacrylate de glycidyle renfermant 24 % d'acrylate d'éthyle et 8 % de méthacrylate de glycidyle et possédant un indice de fluidité, déterminé selon la norme ASTM D 1238, ayant une valeur égale à 6 g par 10 minutes. Après 3 heures de mélange sous agitation à 175 °C, on obtenait une masse homogène constituant une composition bitume/polymère témoin non réticulée.

. Exemple 3 (selon l'invention) : Préparation d'une composition bitume/polymère renfermant un élastomère réticulé au soufre et un adjuvant polymère.

Dans un réacteur maintenu à 175 °C et sous agitation, on introduisait 974,5 parties du bitume utilisé dans l'exemple 1 et 17,5 parties du copolymère séquencé de styrène et de butadiène employé dans ledit exemple 1, puis 15 minutes après on ajoutait au contenu du réacteur 7,5 parties du terpolymère éthylène/acrylate d'éthyle/ méthacrylate de glycidyle utilisé dans l'exemple 2. Après 2,5 heures de mélange sous agitation à 175 °C, on obtenait une masse homogène.
A la masse homogène précitée, maintenue à 175 °C, on ajoutait alors 0,5 partie de soufre cristallisé et on agitait encore l'ensemble à ladite température pendant 3 heures pour former une composition bitume polymère selon l'invention.

. Exemple 4 (selon l'invention) : Préparation d'une composition bitume/polymère renfermant un élastomère réticulé au soufre, un adjuvant polymère et un additif réactif du type polyamine.

On opérait comme décrit dans l'exemple 3, mais en utilisant seulement 973,5 parties de bitume et, en outre, en incorporant au milieu réactionnel, après addition du terpolymère et avant l'ajout de soufre, 1 partie d'une polyamine grasse, à savoir N-suif amino-3 propyl-1 tétrahydro-1,4,5,6 pyrimidine, commercialisée sous le nom POLYRAM L200® par la Société CECA.

. Exemple 5 (témoin) : Préparation d'une composition bitume/ polymère renfermant un élastomère réticulé au soufre et exempte d'adjuvant polymère.

On opérait comme décrit dans l'exemple 1, mais en utilisant 948,5 parties de bitume, 50 parties de copolymère séquencé styrène/butadiène et 1,5 partie de soufre cristallisé.

. Exemple 6 (selon l'invention) : Préparation d'une composition bitume/polymère renfermant une élastomère réticulé au soufre et un adjuvant polymère.

On opérait comme décrit dans l'exemple 3, mais en utilisant 953,5 parties de bitume, 35 parties de copolymère séquencé styrène/butadiène, 10 parties de terpolymère éthylène/acrylate d'éthyle/méthacrylate de glycidyle et 1,5 partie de soufre cristallisé.

. Exemple 7 (témoin) : Préparation d'une composition bitume/ polymère renfermant un adjuvant polymère et exempte d'élastomère réticulé au soufre.

On opérait comme décrit dans l'exemple 2, mais en utilisant 950 parties de bitume et en remplaçant le terpolymère par 50 parties d'un copolymère éthylène/acétate de vinyle renfermant 18 % d'acétate de vinyle et possédant un indice de fluidité, déterminé selon la norme ASTM D 1238, ayant une valeur égale à 150 g par 10 minutes.

. Exemple 8 (selon l'invention) : Préparation d'une composition bitume/polymère renfermant un élastomère réticulé au soufre et un adjuvant polymère.

On opérait comme décrit dans l'exemple 6, mais en remplaçant le terpolymère éthylène/acrylate d'éthyle/méthacrylate de glycidyle par 15 parties du copolymère éthylène/acétate de vinyle utilisé dans l'exemple 7.
Pour chacune des compositions bitume/polymère obtenues comme indiqué dans les exemples 1 à 8, ainsi que pour le bitume de départ, on a déterminé les caractéristiques suivantes :

- pénétrabilité à 25 °C (Pen. 25),
- point de ramollissement Bille et Anneau (TBA),
- indice de PFEIFFER (IP),
- caractéristiques rhéologiques en traction, à savoir :

  . contrainte à la rupture (∇r),
  . allongement à la rupture (εr).

Les résultats obtenus sont rassemblés dans le tableau suivant.

TABLEAU

| Exemple | O* | 1 | 2 | 3 | 4 | 5 | 6 | 7 | 8 |
|---|---|---|---|---|---|---|---|---|---|
| PFO | | | GMA | GMA | GMA | | GMA | EVA | EVA |
| % PFO | | | 2,5 | 0,75 | 0,75 | | 1 | 5 | 1,5 |
| % Elastomère | | 2,50 | | 1,75 | 1,75 | 5 | 3,50 | | 3,50 |
| % Soufre | | 0,08 | | 0,05 | 0,05 | 0,15 | 0,15 | | 0,15 |
| % Amine | | | | | 0,10 | | | | |
| % Bitume | 100 | 97,42 | 97,5 | 97,45 | 97,35 | 94,85 | 95,35 | 95 | 94,85 |
| Pen 25 (0,1 mm) | 68 | 59,5 | 63,5 | 60,5 | 71 | 50 | 56 | 45 | 51 |
| TBA (°C) | 49 | 54,1 | gel | 57,3 | 57 | 66 | 73 | 64 | 70 |
| IP | -0,71 | 0,21 | n.c. | 0,97 | 1,35 | 2,15 | 3,62 | 1,53 | 2,88 |
| Traction à 20°C<br>∇r (daN/cm2)<br>εr (%) | <br>0,0<br>> 700 | <br>0,63<br>> 700 | <br>0,40<br>> 700 | <br>0,95<br>> 700 | <br>1,05<br>> 700 | <br>1,30<br>> 700 | <br>1,80<br>> 700 | <br>0,80<br>500 | <br>1,60<br>> 700 |
| Traction à 5°C<br>∇r (daN/cm2)<br>εr (%) | | <br>5,6<br>> 700 | <br>3,7<br>> 350 | <br>6,2<br>> 700 | <br>6,2<br>> 700 | <br>8,7<br>> 700 | <br>9,2<br>> 700 | <br>4,5<br>> 180 | <br>9,0<br>> 700 |

O* : bitume de départ.
PFO : adjuvant polymère.
élastomère : copolymère séquencé styrène/butadiène.
EVA : copolymère éthylène/acétate de vinyle.
GMA : terpolymère éthylène/acrylate d'éthyle/méthacrylate de glycidyle.
**) : après maintien de la composition pendant 3 jours à 180 °C, on observe une démixtion.
n.c.: non calculable.

Au vu des résultats rassemblés dans le tableau, on peut remarquer que :

- l'association de l'adjuvant polymère (terpolymère éthylène/acrylate d'éthyle/méthacrylate de glycidyle ou copolymère éthylène/acétate de vinyle) et de l'élastomère (copolymère séquencé styrène/butadiène) dans les compositions bitume/polymère réticulées au soufre (compositions bitume/polymère selon l'invention) procure un effet de synergie, qui fait que les propriétés mécaniques (TBA, IP, ∇r et εr) des compositions bitume/polymère selon l'invention sont supérieures, à teneurs globales identiques ou plus faibles en élastomère et adjuvant polymère, aux propriétés mécaniques correspondantes des compositions bitume/polymère témoins (Cf. exemple 3 selon l'invention comparé aux exemples témoins 1 et 2 ; exemple 6 selon l'invention comparé à l'exemple témoin 5 ; exemple 8 selon l'invention comparé à l'exemple témoin 7),
- en l'absence de copolymère séquencé styrène/butadiène réticulé au soufre dans la composition bitume/polymère et à teneur de quelques pour-cent en terpolymère éthylène/ acrylate d'éthyle/méthacrylate de glycidyle dans ladite composition, cette composition bitume/polymère se présente sous la forme d'un gel non manipulable (Cf. exemple témoin 2),

- en l'absence de copolymère séquencé styrène/butadiène réticulé au soufre dans la composition bitume/polymère et à teneur plus élevée en copolymère éthylène/acétate de vinyle dans ladite composition, cette composition bitume/ polymère est instable au stockage à 180 °C (démixtion de la composition après maintien pendant 3 jours à 180 °C),
- l'ajout de polyamine renforce les propriétés et notamment l'indice de PFEIFFER.

## Revendications

**1.** Procédé de préparation de compositions bitume/polymère à propriétés mécaniques améliorées, dans lequel on met en contact, en opérant à des températures comprises entre 100 °C et 230 °C et sous agitation pendant une durée d'au moins 10 minutes, un bitume ou mélange de bitumes avec, comptés en poids du bitume, entre 0,3 % et 20 % d'un élastomère réticulable au soufre et un agent de couplage donneur de soufre en quantité propre à fournir une quantité de soufre libre représentant 0,1 % à 20 % du poids de polymère réticulable au soufre dans le milieu réactionnel renfermant les ingrédients bitume, élastomère et agent de couplage, ledit procédé se caractérisant en ce que, lors de ladite mise en contact, le milieu réactionnel contient également, en poids du bitume, 0,05 % à 15 % d'un adjuvant polymère consistant en un ou plusieurs polymères oléfiniques fonctionnalisés choisis parmi les copolymères renfermant en poids, x % de motifs issus de l'éthylène ou du propylène, y % de motifs issus d'un ou plusieurs monomères A de formule

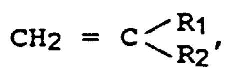

z % de motifs issus d'au moins un monomère B de formule

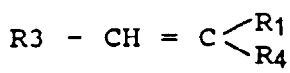

et v % de motifs issus d'un ou plusieurs monomères C différents des monomères A et B, avec, dans ces formules, $R_1$ désignant H, $CH_3$ ou $C_2H_5$, R2 représentant un radical $-COOR_5$, $-OR_5$ ou $-OOCR_6$ avec $R_5$ désignant un radical alkyle en $C_1$ à $C_{10}$ et $R_6$ représentant H ou un radical alkyle en $C_1$ à $C_3$, $R_3$ désignant H, COOH ou $COOR_5$, $R_5$ ayant la signification précitée, et $R_4$ désignant un radical -COOH, -OH, -COO-

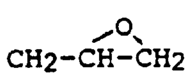 ou 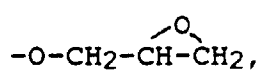

et x, y, z et v étant des nombres tels que $40 \leq x \leq 99,7$, $0 \leq y \leq 50$, $0 \leq z \leq 20$ et $0 \leq v \leq 15$ avec $y + z \geq 0,3$ et $x + y + z + v = 100$.

**2.** Procédé selon la revendication 1, caractérisé en ce que dans les copolymères susceptibles de constituer l'adjuvant polymère, x, y, z, et v sont tels que $50 \leq x \leq 99,5$, $0 \leq y \leq 40$, $0 \leq z \leq 15$ et $0 \leq v \leq 10$ avec $y + z \geq 0,5$ et $x + y + z + v = 100$.

**3.** Procédé selon la revendication 1 ou 2, caractérisé en ce que l'adjuvant polymère est présent dans le milieu réactionnel en quantité représentant 0,1 % à 10 % en poids du bitume.

**4.** Procédé selon l'une des revendications 1 à 3, caractérisé en ce que les monomères A, qui fournissent des motifs dans les copolymères oléfiniques fonctionnalisés, sont choisis parmi le formiate de vinyle, l'acétate de vinyle, le propionate de vinyle, le butyrate de vinyle, les éthers de vinyle $CH_2 = CH-O-R_5$, les acrylates d'alkyle de formule $CH_2 = CH-COOR_5$, et les méthacrylates d'alkyle de formule

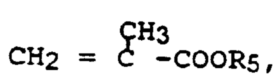

$R_5$ désignant un radical alkyle en $C_1$ à $C_{10}$ et de préférence en $C_1$ à $C_6$, notamment méthyle, éthyle, propyle, butyle.

**5.** Procédé selon l'une des revendications 1 à 4, caractérisé en ce que les monomères B, qui fournissent des motifs dans les copolymères oléfiniques fonctionnalisés, sont choisis parmi l'acide maléique et son anhydride, l'acide acrylique, l'acide méthacrylique, les maléates acides d'alkyle de formule HOOC-CH = CH-$COOR_7$ où $R_7$ est un radical alkyle en $C_1$ à $C_6$, l'acrylate de glycidyle, le méthacrylate de glycidyle, l'alcool vinylique et le vinyléther de glycidyle.

**6.** Procédé selon l'une des revendications 1 à 5, caractérisé en ce que les monomères C, qui fournissent des motifs dans les copolymères oléfiniques fonctionnalisés, sont choisis parmi CO, $SO_2$, acrylonitrile.

**7.** Procédé selon l'une des revendications 1 à 5, caractérisé en ce que les copolymères oléfiniques fonctionnalisés sont choisis dans le groupe consistant en :

(a) les copolymères statistiques d'éthylène et d'acétate de vinyle et les copolymère statistiques d'éthylène et d'acrylate ou méthacrylate d'alkyle à reste alkyle en $C_1$ à $C_6$, qui renferment, en poids, 40 % à 99,7 % et de préférence 50 % à 99 % d'éthylène ;
(b) les copolymères statistiques d'éthylène et d'un monomère choisi parmi l'acide acrylique, l'acide méthacrylique, l'acide maléique ou son anhydride, l'acrylate de glycidyle et le méthacrylate de glycidyle, qui renferment, en poids, 80 % à 99,7 % et de préférence 85 % à 99,5 % d'éthylène ;
(c) les terpolymères statistiques d'éthylène, d'un monomère A choisi parmi l'acétate de vinyle et les acrylates ou méthacrylates d'alkyle à reste alkyle en $C_1$ à $C_6$ et d'un monomère B choisi parmi l'acide acrylique, l'acide méthacrylique, l'acide maléique ou son anhydride, l'acrylate de glycidyle et le méthacrylate de glycidyle, qui renferment, en poids, 0,5 % à 40 % de motifs issus du monomère A et 0,5 % à 15 % de motifs issus du monomère B, le reste étant formé de motifs issus de l'éthylène ; et
(d) les copolymères résultant du greffage d'un monomère B choisi parmi l'acide acrylique, l'acide méthacrylique, l'acide maléique ou son anhydride, l'acrylate de glycidyle et le méthacrylate de glycidyle, sur un substrat consistant en un polymère choisi parmi les polyéthylènes, notamment polyéthylènes basse densité, les polypropylènes et les copolymères statistiques définis sous (a), lesdits copolymères greffés renfermant, en poids, 0,5 % à 15 % de motifs greffés issus du monomère B.

**8.** Procédé selon la revendication 7, caractérisé en ce que les copolymères oléfiniques fonctionnalisés sont choisis parmi :

(i) les terpolymères statistiques d'éthylène, d'acrylate ou méthacrylate d'alkyle à reste alkyle en $C_1$ à $C_6$ et d'anhydride maléique, qui renferment, en poids, 0,5 % à 40 % de motifs issus d'acrylate ou méthacrylate d'alkyle et 0,5 % à 15 % de motifs issus de l'anhydride maléique, le reste étant formé de motifs issus de l'éthylène ;
(il) les terpolymères statistiques d'éthylène, d'acrylate ou méthacrylate d'alkyle à reste alkyle en $C_1$ à $C_6$ et d'acrylate ou méthacrylate de glycidyle, qui renferment, en poids, 0,5 % à 40 % de motifs issus d'acrylate ou méthacrylate d'alkyle et 0,5 % à 15 % de motifs issus d'acrylate ou méthacrylate de glycidyle, le reste étant formé de motifs issus de l'éthylène ; et
(iii) les polyéthylènes basse densité greffés anhydride maléique et les polypropylènes greffés anhydride maléique, qui renferment, en poids, 0,5 % à 15 % de motifs greffés issus de l'anhydride maléique.

**9.** Procédé selon l'une des revendications 1 à 8, caractérisé en ce que l'adjuvant polymère est constitué en associant un copolymère oléfinique fonctionnalisé comportant des motifs à groupements fonctionnels -COOH ou -OH et un copolymère oléfinique fonctionnalisé comportant des motifs à groupements fonctionnels glycidyles.

**10.** Procédé selon l'une des revendications 1 à 9, caractérisé en ce que les copolymères oléfiniques utilisés pour constituer l'adjuvant polymère possèdent un indice de fluidité, déterminé selon la norme ASTM D 1238, ayant une valeur, exprimée en g par 10 minutes, comprise entre 0,3 et 3000 et de préférence entre 0,5 et 900.

**11.** Procédé selon l'une des revendications 1 à 10, caractérisé en ce que le bitume ou le mélange de bitumes est choisi parmi les bitumes ayant une viscosité cinématique à 100 °C comprise entre 0,5 x $10^{-4}$ $m^2$/s et 3 x $10^{-2}$ $m^2$/s et de préférence entre 1 x $10^{-4}$ m2/s et 2 x $10^{-2}$ $m^2$/s.

**12.** Procédé selon la revendication 11, caractérisé en ce que le bitume ou mélange de bitumes présente une pénétrabilité à 25°C, définie selon la norme NF T 66004, comprise entre 5 et 800 et de préférence entre 10 et 400.

**13.** Procédé selon l'une des revendications 1 à 12, caractérisé en ce que la quantité d'élastomère réticulable au soufre représente 0,5 % à 10 % du poids du bitume.

**14.** Procédé selon l'une des revendications 1 à 13, caractérisé en ce que l'élastomère réticulable au soufre est choisi parmi les copolymères statistiques ou séquencés de styrène et d'un diène conjugué, ledit diène étant en particulier tel que butadiène, isoprène, chloroprène, butadiène carboxylé et isoprène carboxylé.

**15.** Procédé selon la revendication 14, caractérisé en ce que le copolymère de styrène et de diène conjugué renferme, en poids, 5 % à 50 % de styrène.

**16.** Procédé selon la revendication 14 ou 15, caractérisé en ce que la masse moléculaire moyenne en poids du copolymère de styrène et de diène conjugué est comprise entre 10 000 et 600 000 daltons et de préférence entre 30 000 et 400 000 daltons.

**17.** Procédé selon l'une des revendications 1 à 16, caractérisé en ce que l'agent de couplage donneur de soufre est choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre.

**18.** Procédé selon la revendication 17, caractérisé en ce que l'agent de couplage donneur de soufre est choisi parmi les produits M, qui renferment, en poids, de 0 % à 100 % d'une composante CA consistant en un ou plusieurs accélérateurs de vulcanisation donneurs de soufre et de 100 % à 0 % d'une composante CB consistant en un ou plusieurs agents de vulcanisation choisis parmi le soufre élémentaire et les polysulfures d'hydrocarbyle, et les produits N, qui renferment une composante CC consistant en un ou plusieurs accélérateurs de vulcanisation non donneurs de soufre et un produit M dans un rapport pondéral de la composante CC au produit M allant de 0,01 à 1 et de préférence de 0,05 à 0,5.

**19.** Procédé selon l'une des revendications 1 à 18 caractérisé en ce que le milieu réactionnel donnant naissance aux compositions bitume/polymère est formé en réalisant tout d'abord un mélange renfermant le bitume ou mélange de bitumes et l'élastomère réticulable au soufre, puis en incorporant à ce mélange l'agent de couplage et, simultanément ou subséquemment, l'adjuvant polymère.

**20.** Procédé selon l'une des revendications 1 à 18, caractérisé en ce que le milieu réactionnel donnant naissance aux compositions bitume/polymère est formé en réalisant un mélange renfermant le bitume ou mélange de bitumes, l'élastomère réticulable au soufre et l'adjuvant polymère, puis en incorporant l'agent de couplage donneur de soufre au mélange obtenu.

**21.** Procédé selon la revendication 20, caractérisé en ce que l'on met tout d'abord en contact des quantités appropriées de l'élastomère réticulable au soufre et de l'adjuvant polymère avec le bitume ou mélange de bitumes, en opérant à des températures comprises entre 100 °C et 230 °C, plus particulièrement entre 120 °C et 190 °C, et sous agitation, pendant une durée suffisante, généralement de l'ordre de quelques dizaines de minutes à quelques heures, par exemple de l'ordre de 30 minutes à 8 heures, pour former un mélange homogène, puis on incorpore au dit mélange une quantité appropriée de l'agent de couplage et l'on maintient le tout sous agitation à des températures comprises entre 100 °C et 230 °C, plus particulièrement entre 120 °C et 190 °C, et identiques ou non aux températures de mélange de l'élastomère réticulable au soufre et de l'adjuvant polymère avec le bitume ou mélange de bitumes, pendant une durée au moins égale à 10 minutes et généralement allant de 10 minutes à 5 heures et plus particulièrement de 30 minutes à 180 minutes, pour former un produit de réaction constituant la composition bitume/polymère.

**22.** Procédé selon la revendication 21, caractérisé en ce que l'adjuvant polymère est incorporé au bitume ou mélange de bitumes avant ou après l'élastomère réticulable au soufre.

**23.** Procédé selon l'une des revendications 1 à 22, caractérisé en ce que le milieu réactionnel donnant naissance aux compositions bitume/polymère renferme un ou plusieurs additifs susceptibles de réagir avec les groupements fonctionnels du copolymère ou des copolymères constituant l'adjuvant polymère, lesdits additifs réactifs étant en particulier des amines, notamment polyamines, primaires ou secondaires, des alcools, notamment polyols, des acides, notamment polyacides, ou encore des sels métalliques, notamment composés de métaux des groupes I, II, III et VIII du Tableau Périodique des Eléments.

**24.** Procédé selon la revendication 23, caractérisé en ce que la quantité d'additif réactif ou d'additifs réactifs incorporée au milieu réactionnel donnant naissance aux compositions bitume/polymère représente 0,01 % à 10 % et de préférence 0,05 % à 5 % du poids du bitume.

**25.** Procédé selon l'une des revendications 1 à 24, caractérisé en ce que le milieu réactionnel donnant naissance aux compositions bitume/polymère est additionné, à un moment quelconque de sa constitution, de 1 % à 40 % et plus particulièrement de 2 % à 30 %, en poids du bitume ou mélange de bitumes, d'un agent fluxant.

**26.** Procédé selon la revendication 25, caractérisé en ce que ledit agent fluxant consiste en une huile hydrocarbonée présentant un intervalle de distillation à pression atmosphérique, déterminé selon la norme ASTM D 86-67, compris entre 100 °C et 600 °C et situé plus spécialement entre 150 °C et 400 °C.

**27.** Procédé selon la revendication 26, caractérisé en ce que l'huile hydrocarbonée est choisie parmi les coupes pétrolières de caractère aromatique, les coupes pétrolières de caractère naphténo-aromatique, les coupes pétrolières de caractère naphténo-paraffinique, les coupes pétrolières de caractère paraffinique, les huiles de houille et les huiles d'origine végétale.

**28.** Procédé selon la revendication 26 ou 27, caractérisé en ce que l'élastomère réticulable au soufre, l'adjuvant polymère et l'agent de couplage sont incorporés au bitume ou mélange de bitumes sous la forme d'une solution mère de ces produits dans l'huile hydrocarbonée constituant l'agent fluxant.

**29.** Procédé selon la revendication 28, caractérisé en ce que la solution mère renferme, comptés au poids de l'huile hydrocarbonée, 5 % à 30 % d'élastomère réticulable au soufre, 1 % à 20% d'adjuvant polymère et 0,005 % à 6 % d'agent de couplage.

**30.** Procédé selon la revendication 28 ou 29, caractérisé en ce que l'on mélange la solution mère avec le bitume ou mélange de bitumes, en opérant à des températures comprises entre 100 °C et 230 °C, plus particulièrement entre 120 °C et 190 °C, et sous agitation, puis on maintient le mélange résultant sous agitation à des températures comprises entre 100 °C et 230 °C, plus particulièrement entre 120 °C et 190 °C, pendant une durée au moins égale à 10 minutes, et généralement allant de 10 minutes à 90 minutes, pour former un produit de réaction constituant la composition bitume/polymère.

**31.** Application des compositions bitume/polymère obtenues par le procédé selon l'une des revendications 1 à 30, à la production de liants bitume/polymère, lesdits liants consistant en lesdites compositions utilisées telles quelles ou bien étant formés par dilution desdites compositions bitume/polymère par un bitume ou mélange de bitumes ou par une composition bitume/polymère selon l'une des revendications 1 à 30 à teneurs plus faibles en élastomère et en adjuvant polymère, lesquels liants bitume/polymère sont notamment utilisables, directement ou après mise en émulsion aqueuse, à la réalisation de revêtements, notamment revêtements routiers du type enduit superficiel, à la production d'enrobés mis en place à chaud ou à froid, ou encore à la réalisation de revêtements d'étanchéité.

**32.** Solution mère de polymères, utilisable notamment pour la préparation de compositions bitume/polymère, comprenant (i) une huile hydrocarbonée, qui présente un intervalle de distillation à pression atmosphérique, déterminé selon la norme ASTM D 86-67, compris entre 100 °C et 600 °C, et, en solution dans cette huile, (il) un élastomère réticulable au soufre et (iii) un agent de couplage donneur de soufre, caractérisée en ce que ladite solution mère renferme également, en solution, (iv) un adjuvant polymère consistant en un ou plusieurs polymères oléfiniques fonctionnalisés choisis parmi les copolymères renfermant, en poids, x % de motifs issus de l'éthylène ou du propylène, y % de motifs issus d'un ou plusieurs monomères A de formule

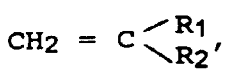

z % de motifs issus d'au moins un monomère B de formule

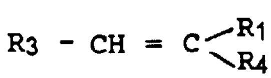

et v % de motifs issus d'un ou plusieurs monomères C différents des monomères A et B, avec, dans ces formules, $R_1$ désignant H, $CH_3$ ou $C_2H_5$, $R_2$ représentant un radical $-COOR_5$, $-OR_5$ ou $-OOCR_6$ avec $R_5$ désignant un radical alkyle en $C_1$ à $C_{10}$ et $R_6$ représentant H ou un radical alkyle en $C_1$ à $C_3$, $R_3$ désignant H, COOH ou $COOR_5$, $R_5$ ayant la signification précitée, et $R_4$ désignant un radical -COOH, -OH,

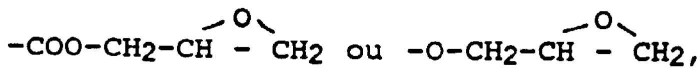

et x, y, z et v étant des nombres tels que $40 \leq x \leq 99{,}7$, $0 \leq y \leq 50$, $0 \leq z \leq 20$ et $0 \leq v \leq 15$ avec $y + z \geq 0{,}3$ et $x + y + z + v = 100$.

**33.** Solution mère selon la revendication 32, caractérisée en ce que dans les copolymères susceptibles de constituer l'adjuvant polymère, x, y, z, et v sont tels que $50 \leq x \leq 99{,}5$, $0 \leq y \leq 40$, $0 \leq z \leq 15$ et $0 \leq v \leq 10$ avec $y + z \geq 0{,}5$ et $x + y + z + v = 100$.

**34.** Solution mère selon la revendication 32 ou 33, caractérisée en ce que les monomères A, qui fournissent des motifs dans les copolymères oléfiniques fonctionnalisés, sont choisis parmi le formiate de vinyle, l'acétate de vinyle, le propionate de vinyle, le butyrate de vinyle, les éthers de vinyle $CH_2 = CH\text{-}O\text{-}R_5$, les acrylates d'alkyle de formule $CH_2 = CH\text{-}COOR_5$, et les méthacrylates d'alkyle de formule

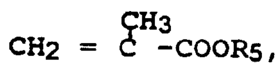

$R_5$ désignant un radical alkyle en $C_1$ à $C_{10}$ et de préférence en $C_1$ à $C_6$, notamment méthyle, éthyle, propyle, butyle.

**35.** Solution mère selon l'une des revendications 32 à 34, caractérisée en ce que les monomères B, qui fournissent des motifs dans les copolymères oléfiniques fonctionnalisés, sont choisis parmi l'acide maléique et son anhydride, l'acide acrylique, l'acide méthacrylique, les maléates acides d'alkyle de formule $HOOC\text{-}CH = CH\text{-}COOR_7$ où $R_7$ est un radical alkyle en $C_1$ à $C_6$, l'acrylate de glycidyle, le méthacrylate de glycidyle, l'alcool vinylique et le vinyléther de glycidyle.

**36.** Solution mère selon l'une des revendications 32 à 35, caractérisée en ce que les monomères C, qui fournissent des motifs dans les copolymères oléfiniques fonctionnalisés, sont choisis parmi CO, $SO_2$, acrylonitrile.

**37.** Solution mère selon l'une des revendications 32 à 35, caractérisée en ce que les copolymères oléfiniques fonctionnalisés sont choisis parmi :

(a) les copolymères statistiques d'éthylène et d'acétate de vinyle et les copolymères statistiques d'éthylène et d'acrylate ou méthacrylate d'alkyle à reste alkyle en $C_1$ à $C_6$, qui renferment, en poids, 40 % à 99,7 % et de préférence 50 % à 99 % d'éthylène,
(b) les copolymères statistiques d'éthylène et d'un monomère choisi parmi l'acide acrylique, l'acide méthacrylique, l'acide maléique ou son anhydride, l'acrylate de glycidyle et le méthacrylate de glycidyle, qui renferment, en poids, 80 % à 99,7 % et de préférence 85 % à 99,5 % d'éthylène ;
(c) les terpolymères statistiques d'éthylène, d'un monomère A choisi parmi l'acétate de vinyle et les acrylates ou méthacrylates d'alkyle à reste alkyle en $C_1$ à $C_6$ et d'un monomère B choisi parmi l'acide acrylique, l'acide méthacrylique, l'acide maléique ou son anhydride, l'acrylate de glycidyle et le méthacrylate de glycidyle, qui renferment, en poids, 0,5 % à 40 % de motifs issus du monomère A et 0,5 % à 15 % de motifs issus du monomère B, le reste étant formé de motifs issus de l'éthylène ; et
(d) les copolymères résultant du greffage d'un monomère B choisi parmi l'acide acrylique, l'acide méthacrylique, l'acide maléique ou son anhydride, l'acrylate de glycidyle et le méthacrylate de glycidyle, sur un substrat consistant en un polymère choisi parmi les polyéthylènes, notamment polyéthylènes basse densité, les polypropylènes et les copolymères statistiques définis sous (a), lesdits copolymères greffés renfermant, en poids, 0,5 % à 15 % de motifs greffés issus du monomère B.

**38.** Solution mère selon la revendication 37, caractérisée en ce que les copolymères oléfiniques fonctionnalisés sont choisis parmi :

(i) les terpolymères statistiques d'éthylène, d'acrylate ou méthacrylate d'alkyle à reste alkyle en $C_1$ à $C_6$ et d'anhydride maléique, qui renferment, en poids, 0,5 % à 40 % de motifs issus d'acrylate ou méthacrylate d'alkyle et 0,5 % à 15 % de motifs issus de l'anhydride maléique, le reste étant formé de motifs issus de l'éthylène ;
(il) les terpolymères statistiques d'éthylène, d'acrylate ou méthacrylate d'alkyle à reste alkyle en $C_1$ à $C_6$ et d'acrylate ou méthacrylate de glycidyle, qui renferment, en poids, 0,5 % à 40 % de motifs issus d'acrylate ou méthacrylate d'alkyle et 0,5 % à 15 % de motifs issus d'acrylate ou méthacrylate de glycidyle, le reste étant formé de motifs issus de l'éthylène ; et
(iii) les polyéthylènes basse densité greffés anhydride maléique et les polypropylènes greffés anhydride maléique, qui renferment, en poids, 0,5 % à 15 % de motifs greffés issus de l'anhydride maléique.

**39.** Solution mère selon l'une des revendications 32 à 38, caractérisée en ce que l'adjuvant polymère est constitué en associant un copolymère oléfinique fonctionnalisé comportant des motifs à groupements fonctionnels -COOH ou -OH et un copolymère oléfinique fonctionnalisé comportant des motifs à groupements fonctionnels glycidyles.

**40.** Solution mère selon l'une des revendications 32 à 39, caractérisée en ce que l'élastomère réticulable au soufre est choisi parmi les copolymères statistiques ou séquencés de styrène et d'un diène conjugué, ledit diène étant en particulier tel que butadiène, isoprène, chloroprène, butadiène carboxylé et isoprène carboxylé.

**41.** Solution mère selon la revendication 40, caractérisée en ce que le copolymère de styrène et de diène conjugué renferme en poids, 5 % à 50 % de styrène.

**42.** Solution mère selon la revendication 40 ou 41, caractérisée en ce que la masse moléculaire moyenne en poids du copolymère de styrène et de diène conjugué est comprise entre 10 000 et 600 000 daltons et de préférence entre 30 000 et 400 000 daltons.

**43.** Solution mère selon l'une des revendications 32 à 42, caractérisée en ce que l'agent de couplage donneur de soufre est choisi dans le groupe formé par le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre.

**44.** Solution mère selon la revendication 43, caractérisée en ce que l'agent de couplage donneur de soufre est choisi parmi les produits M, qui renferment, en poids, de 0 % à 100 % d'une composante CA consistant en un ou plusieurs accélérateurs de vulcanisation donneurs de soufre et de 100 % à 0 % d'une composante CB consistant en un ou plusieurs agents de vulcanisation choisis parmi le soufre élémentaire et les polysulfures d'hydrocarbyle, et les produits N, qui renferment une composante CC consistant en un ou plusieurs accélérateurs de vulcanisation non donneurs de soufre et un produit M dans un rapport pondéral de la composante CC au produit M allant de 0,01 à 1 et de préférence de 0,05 à 0,5.

**45.** Solution mère selon l'une des revendications 32 à 44, caractérisée en ce que l'huile hydrocarbonée présente un intervalle de distillation à pression atmosphérique situé entre 150 °C et 400 °C.

**46.** Solution mère selon l'une des revendications 32 à 45, caractérisée en ce que l'huile hydrocarbonée est choisie parmi les coupes pétrolières de caractère aromatique, les coupes pétrolières de caractère naphténo-aromatique, les coupes pétrolières de caractère naphténo-paraffinique, les coupes pétrolières de caractère paraffinique, les huiles de houille et les huiles d'origine végétale.

**47.** Solution mère selon l'une des revendications 32 à 46, caractérisée en ce qu'elle renferme, comptés au poids de l'huile hydrocarbonée, 5 % à 30 % d'élastomère réticulable au soufre, 1 % à 20 % d'adjuvant polymère et 0,005 % à 6 % d'agent de couplage donneur de soufre.

**Patentansprüche**

**1.** Verfahren zur Herstellung von Bitumen-Polymer-Zusammensetzungen mit verbesserten mechanischen Eigenschaften, bei dem man bei Temperaturen zwischen 100 und 230°C und unter Rühren während einer Zeitdauer von wenigstens 10 Minuten ein Bitumen oder ein Bitumengemisch mit, bezogen auf das Gewicht des Bitumens, 0,3 bis 20 % eines mit Schwefel vernetzbaren Elastomers und einem schwefelspendenden Kupplungsmittel in

einer Menge, die geeignet ist, eine Menge an freiem Schwefel von 0,1 bis 20 %, bezogen auf das Gewicht des mit Schwefel vernetzbaren Polymers, zu liefern, in dem Reaktionsgemisch in Berührung bringt, das die Komponenten Bitumen, Elastomer und Kupplungsmittel enthält, dadurch **gekennzeichnet,** daß während der Kontaktierung das Reaktionsgemisch außerdem noch, bezogen auf das Gewicht des Bitumens, 0,05 bis 15 % eines Polymerzusatzes enthält, bestehend aus einem oder mehreren funktionalisierten olefinischen Polymeren, ausgewählt unter Copolymeren, die, bezogen auf das Gewicht, x % von Ethylen oder Propylen abgeleitete Strukturelemente, y % von einem oder mehreren Monomeren A der Formel

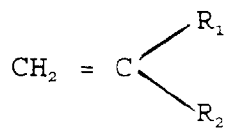

abgeleitete Strukturelemente, z % von wenigstens einem Monomer B der Formel

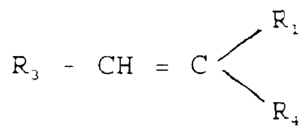

abgeleitete Strukturelemente und v % von einem oder mehreren Monomeren C, die sich von den Monomeren A und B unterscheiden, abgeleitete Strukturelemente enthalten, wobei in diesen Formeln $R_1$ H, $CH_3$ oder $C_2H_5$ und $R_2$ einen Rest $-COOR_5$, $-OR_5$ oder $-OOCR_6$ bezeichnen, wobei $R_5$ einen $C_{1-10}$-Alkylrest und $R_6$ H oder einen $C_{1-3}$-Alkylrest bedeuten, $R_3$ H, -COOH oder $-COOR_5$ bedeutet und $R_5$ die obige Bedeutung hat, $R_4$ einen Rest -COOH, -OH,

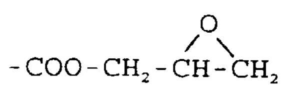 oder 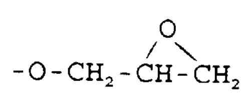

bedeutet und x, y, z und v Zahlenverhältnisse wie $40 \leq x \leq 99{,}7$, $0 \leq y \leq 50$, $0 \leq z \leq 20$ und $0 \leq v \leq 15$ bei $y + z \geq 0{,}3$ und $x + y + z + v = 100$ bedeuten.

2. Verfahren nach Anspruch 1, dadurch **gekennzeichnet,** daß in den Copolymeren, welche den Polymerzusatz zu bilden vermögen, x, y, z und v Zahlenverhältnisse wie $50 \leq x \leq 99{,}5$, $0 \leq y \leq 40$, $0 \leq z \leq 15$ und $0 \leq v \leq 10$ bei $y + z \geq 0{,}5$ und $x + y + z + v = 100$ bedeuten.

3. Verfahren nach Anspruch 1 oder 2, dadurch **gekennzeichnet**, daß der Polymerzusatz im Reaktionsgemisch in einer Menge von 0,1 bis 10 %, bezogen auf das Gewicht des Bitumens, vorliegt.

4. Verfahren nach einem der Ansprüche 1 bis 3, dadurch **gekennzeichnet,** daß die Monomere A, die in den funktionalisierten olefinischen Copolymeren Strukturelemente liefern, ausgewählt werden unter Vinylformiat, Vinylacetat, Vinylpropionat und Vinylbutyrat, Vinylethern $CH_2=CH-O-R_5$, Alkylacrylaten der Formel $CH_2=CH-COOR_5$ und Alkylmethacrylaten der Formel

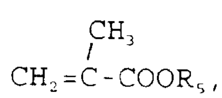

wobei $R_5$ einen $C_{1-10}$- und vorzugsweise $C_{1-6}$-Alkylrest und insbesondere Methyl, Ethyl, Propyl und Butyl bedeutet.

5. Verfahren nach einem der Ansprüche 1 bis 4, dadurch **gekennzeichnet,** daß die Monomere B, die in den funktionalisierten olefinischen Copolymeren Strukturlemente liefern, ausgewählt werden unter Maleinsäure und ihrem Anhydrid, Acrylsäure, Methacrylsäure, sauren Alkylmaleaten der Formel $HOOC-CH=CH-COOR_7$, worin $R_7$ einen

$C_{1-6}$-Alkylrest bedeutet, Glycidylacrylat, Glycidylmethacrylat, Vinylalkohol oder Glycidylvinylether.

**6.** Verfahren nach einem der Ansprüche 1 bis 5, dadurch **gekennzeichnet,** daß die Monomere C, die in den funktionalisierten olefinischen Copolymeren Strukturelemente liefern, ausgewählt werden unter CO, $SO_2$ und Acrylnitril.

**7.** Verfahren nach einem der Ansprüche 1 bis 5, dadurch **gekennzeichnet**, daß die funktionalisierten olefinischen Copolymere ausgewählt werden aus der Gruppe, bestehend aus

(a) statistischen Ethylen-Vinylacetat-Copolymeren und statistischen Ethylen-Alkylacrylat- oder -methacrylat-Copolymeren mit einem $C_{1-6}$-Alkylrest, die, bezogen auf das Gewicht, 40 bis 99,7 % und vorzugsweise 50 bis 99 % Ethylen enthalten,
(b) statistischen Copolymeren aus Ethylen und einem Monomer B, ausgewählt unter Acryl-, Methacryl- und Maleinsäure oder Maleinsäureanhydrid, Glycidylacrylat und -methacrylat, die, bezogen auf das Gewicht, 80 bis 99,7 % und vorzugsweise 85 bis 99,5 % Ethylen enthalten,
(c) statistischen Terpolymeren aus Ethylen, einem Monomer A, ausgewählt unter Vinylacetat und Alkylacrylaten oder -methacrylaten mit einem $C_{1-6}$-Alkylrest, und einem Monomer B, ausgewählt unter Acryl-, Methacryl-, Maleinsäure oder Maleinsäureanhydrid, Glycidylacrylat und -methacrylat, die, bezogen auf das Gewicht, 0,5 bis 40 % vom Monomer A abgeleitete Strukturelemente und 0,5 bis 15 % vom Monomer B abgeleitete Strukturlemente enthalten, wobei der Rest auf von Ethylen abgeleitete Strukturelemente entfällt, und
(d) Copolymeren, die durch Aufpfropfen eines Monomers B, ausgewählt unter Acryl-, Methacryl- und Maleinsäure oder Maleinsäureanhydrid, Glycidylacrylat und -methacrylat, auf ein Substrat, bestehend aus einem Polymer, ausgewählt unter Polyethylenen, insbesondere unter Hochdruckpolyethylenen, Polypropylenen und den unter (a) definierten statistischen Copolymeren erhalten werden, wobei diese Pfropfpolymere 0,5 bis 15 Gew.-% vom Monomer B abgeleitete, aufgepfropfte Strukturelemente enthalten.

**8.** Verfahren nach Anspruch 7, dadurch **gekennzeichnet,** daß die funktionalisierten olefinischen Copolymere ausgewählt werden unter

(i) statistischen Terpolymeren aus Ethylen, Alkylacrylat oder -methacrylat mit einem $C_{1-6}$-Alkylrest und Maleinsäureanhydrid, die 0,5 bis 40 Gew.-% von Alkylacrylat oder -methacrylat abgeleitete Strukturelemente und 0,5 bis 15 Gew.-% von Maleinsäureanhydrid abgeleitete Strukturelemente enthalten, wobei der Rest auf von Ethylen abgeleitete Strukturelemente entfällt,
(ii) statistischen Terpolymeren aus Ethylen, Alkylacrylat oder -methacrylat mit einem $C_{1-6}$-Alkylrest und Glycidylacrylat oder -methacrylat, die 0,5 bis 40 Gew.-% von Alkylacrylat oder -methacrylat abgeleitete Strukturelemente und 0,5 bis 15 Gew.-% von Glycidylacrylat oder -methacrylat abgeleitete Strukturelemente enthalten, wobei der Rest auf von Ethylen abgeleitete Strukturelemente entfällt, und
(iii) mit Maleinsäureanhydrid gepfropften Hochdruckpolyethylenen und mit Maleinsäureanhydrid gepfropften Polypropylenen, die 0,5 bis 15 Gew.-% von Maleinsäureanhydrid abgeleitete gepfropfte Strukturelemente enthalten.

**9.** Verfahren nach einem der Ansprüche 1 bis 8, dadurch **gekennzeichnet,** daß der Polymerzusatz dadurch gebildet wird, daß man ein funktionalisiertes olefinisches Copolymer, das Strukturelemente mit funktionellen -COOH- oder -OH-Gruppen umfaßt, mit einem funktionalisierten olefinischen Copolymer, das Strukturelemente mit funktionellen Glycidylgruppen umfaßt, verbindet.

**10.** Verfahren nach einem der Ansprüche 1 bis 9, dadurch **gekennzeichnet,** daß die für die Bildung des Polymerzusatzes verwendeten Olefincopolymere einen Fließ-index, ermittelt nach der Norm ASTM D 1238, ausgedrückt in g pro 10 Minuten, von 0,3 bis 3000 und vorzugsweise von 0,5 bis 900 besitzen.

**11.** Verfahren nach einem der Ansprüche 1 bis 10, dadurch **gekennzeichnet,** daß das Bitumen oder das Bitumengemisch ausgewählt wird unter Bitumina mit einer kinematischen Viskosität bei 100°C von 0,5 x $10^{-4}$ $m^2/s$ bis 3 x $10^{-2}$ $m^2/s$ und vorzugsweise von 1 x $10^{-4}$ $m^2/s$ bis 2 x $10^{-2}$ $m^2/s$.

**12.** Verfahren nach Anspruch 11, dadurch **gekennzeichnet,** daß das Bitumen oder das Bitumengemisch eine Durchdringbarkeit bei 25°C, definiert gemäß der Norm NF T 66004, von 5 bis 800 und vorzugsweise von 10 bis 400 besitzt.

13. Verfahren nach einem der Ansprüche 1 bis 12, dadurch **gekennzeichnet**, daß die Menge an mit Schwefel vernetzbarem Elastomer 0,5 bis 10 %, bezogen auf das Gewicht des Bitumens, beträgt.

14. Verfahren nach einem der Ansprüche 1 bis 13, dadurch **gekennzeichnet,** daß das mit Schwefel vernetzbare Elastomer ausgewählt wird unter statistischen Copolymeren oder Blockcopolymeren aus Styrol und einem konjugierten Dien, wobei dieses insbesondere Butadien, Isopren, Chloropren, carboxyliertes Butadien oder carboxyliertes Isopren ist.

15. Verfahren nach Anspruch 14, dadurch **gekennzeichnet,** daß das Copolymer aus Styrol und konjugiertem Dien 5 bis 50 Gew.-% Styrol enthält.

16. Verfahren nach Anspruch 14 oder 15, dadurch **gekennzeichnet,** daß die gewichtsmäßige Durchschnittsmolekularmasse des Copolymers aus Styrol und konjugiertem Dien 10.000 bis 600.000 und vorzugsweise 30.000 bis 400.000 Dalton beträgt.

17. Verfahren nach einem der Ansprüche 1 bis 16, dadurch **gekennzeichnet,** daß das schwefelspendende Kupplungsmittel ausgewählt wird aus der Gruppe, bestehend aus elementarem Schwefel, Kohlenwasserstoffpolysulfiden, schwefelspendenden Vulkanisationsbeschleunigern, Gemischen dieser Produkte untereinander und/oder mit nichtschwefelspendenden Vulkanisationsbeschleunigern.

18. Verfahren nach Anspruch 17, dadurch **gekennzeichnet,** daß das schwefelspendende Kupplungsmittel ausgewählt wird unter Produkten M, die 0 bis 100 Gew.-% einer Komponente CA, bestehend aus einem oder mehreren schwefelspendenden Vulkanisationsbeschleunigern, und 100 bis 0 Gew.-% einer Komponente CB, bestehend aus einem oder mehreren Vulkanisationsmitteln, ausgewählt unter elementarem Schwefel und Kohlenwasserstoffpolysulfiden, enthalten, und Produkten N, die eine Komponente CC, bestehend aus einem oder mehreren nichtschwefelspendenden Vulkanisationsbeschleunigern und einem Produkt M, bei einem Gewichtsverhältnis der Komponente CC zum Produkt M von 0,01 bis 1 und vorzugsweise von 0,05 bis 0,5 enthalten.

19. Verfahren nach einem der Ansprüche 1 bis 18, dadurch **gekennzeichnet,** daß das die Bitumen-Polymer-Zusammensetzungen ergebende Reaktionsgemisch dadurch gebildet wird, daß man zuerst das Bitumen oder das Bitumengemisch mit dem mit Schwefel vernetzbaren Elastomer mischt und dann in dieses Gemisch das Kupplungsmittel und gleichzeitig oder nachfolgend den Polymerzusatz einarbeitet.

20. Verfahren nach einem der Ansprüche 1 bis 18, dadurch **gekennzeichnet**, daß das die Bitumen-Polymer-Zusammensetzungen ergebende Reaktionsgemisch dadurch gebildet wird, daß man zuerst das Bitumen oder das Bitumengemisch mit dem mit Schwefel vernetzbaren Elastomer und dem Polymerzusatz mischt und dann in das erhaltene Gemisch das schwefelspendende Kupplungsmittel einarbeitet.

21. Verfahren nach Anspruch 20, dadurch **gekennzeichnet,** daß man zuerst geeignete Mengen des mit Schwefel vernetzbaren Elastomers und des Polymerzusatzes mit dem Bitumen oder Bitumengemisch bei Temperaturen von 100 bis 230°C und insbesondere von 120 bis 190°C unter Rühren während einer ausreichenden Zeitdauer, im allgemeinen während wenigstens 10 Minuten bis einigen Stunden, wie z.B. während 30 Minuten bis 8 Stunden, in Berührung bringt, um ein homogenes Gemisch zu bilden, dann in das Gemisch eine geeignete Menge des Kupplungsmittels einarbeitet und dann das Ganze unter Rühren bei Temperaturen von 100 bis 230°C und insbesondere von 120 bis 190°C, die gegebenenfalls mit den Temperaturen des Mischens des mit Schwefel vernetzbaren Elastomers und des Polymerzusatzes, mit dem Bitumen oder Bitumengemisch übereinstimmen, während einer Zeitdauer von wenigstens 10 Minuten, im allgemeinen während 10 Minuten bis 5 Stunden und insbesondere während 30 bis 180 Minuten hält, um das die Bitumen-Polymer-Zusammensetzung darstellende Reaktionsprodukt zu bilden.

22. Verfahren nach Anspruch 21, dadurch **gekennzeichnet,** daß der Polymerzusatz in das Bitumen oder das Bitumengemisch vor oder nach dem mit Schwefel vernetzbaren Elastomer eingearbeitet wird.

23. Verfahren nach einem der Ansprüche 1 bis 22, dadurch **gekennzeichnet,** daß das die Bitumen-Polymer-Zusammensetzungen ergebende Reaktionsgemisch einen oder mehrere Zusätze enthält, die mit den funktionellen Gruppen des Copolymers oder der Copolymere, welche den Polymerzusatz bilden, zu reagieren vermögen, wobei diese reaktionsfähigen Zusätze insbesondere primäre oder sekundäre Amine, vor allem Polyamine, Alkohole, insbesondere Polyole, Säuren, insbesondere Polysäuren, oder auch Metallsalze, insbesondere Metallverbindungen der I., II., III. und VIII. Gruppe des Periodensystems sind.

**24.** Verfahren nach Anspruch 23, dadurch **gekennzeichnet,** daß die Menge an reaktionsfähigem Zusatz oder reaktionsfähigen Zusätzen, die in das Reaktionsgemisch eingearbeitet wird, das die Bitumen-Polymer-Zusammensetzungen ergibt,- 0,01 bis 10 % und vorzugsweise 0,05 bis 5 %, bezogen auf das Gewicht des Bitumens, beträgt.

**25.** Verfahren nach einem der Ansprüche 1 bis 24, dadurch **gekennzeichnet,** daß das die Bitumen-Polymer-Zusammensetzungen ergebende Reaktionsgemisch zu einem beliebigen Zeitpunkt seiner Bildung mit 1 bis 40 % und insbesondere 2 bis 30 %, bezogen auf das Gewicht des Bitumens oder des Bitumengemisches, mit einem Verflüssigungsmittel versetzt wird.

**26.** Verfahren nach Anspruch 25, dadurch **gekennzeichnet,** das das Verflüssigungsmittel aus einem Kohlenwasserstofföl mit einem Destillationsbereich unter Atmosphärendruck, ermittelt gemäß der Norm ASTM D 86-67, von 100 bis 600°C und insbesondere von 150 bis 400°C besteht.

**27.** Verfahren nach Anspruch 26, dadurch **gekennzeichnet,** daß das Kohlenwasserstofföl unter Erdölfraktionen von aromatischem, naphthen-aromatischem, naphthen-paraffinischem sowie von paraffinischem Charakter, Steinkohlenölen und Pflanzenölen ausgewählt wird.

**28.** Verfahren nach Anspruch 26 oder 27, dadurch **gekennzeichnet,** daß das mit Schwefel vernetzbare Elastomer, der Polymerzusatz und das Kupplungsmittel in das Bitumen oder das Bitumengemisch in Form einer Mutterlauge dieser Produkte im das Verflüssigungsmittel bildenden Kohlenwasserstofföl eingearbeitet werden.

**29.** Verfahren nach Anspruch 28, dadurch **gekennzeichnet,** daß die Mutterlauge, bezogen auf das Gewicht des Kohlenwasserstofföls, 5 bis 30 % mit Schwefel vernetzbares Elastomer, 1 bis 20 % Polymerzusatz und 0,005 bis 6 % Kupplungsmittel enthält.

**30.** Verfahren nach Anspruch 28 oder 29, dadurch**gekennzeichnet,** daß man die Mutterlauge mit dem Bitumen oder dem Bitumengemisch bei Temperaturen von 100 bis 230°C und insbesondere von 120 bis 190°C unter Rühren mischt und dann das erhaltene Gemisch bei Temperaturen von 100 bis 230°C und insbesondere von 120 bis 190°C während einer Zeitdauer von wenigstens 10 Minuten und im allgemeinen von 10 bis 90 Minuten hält, um das die Bitumen-Polymer-Zusammensetzung darstellende Reaktionsprodukt zu bilden.

**31.** Verwendung der nach dem Verfahren gemäß einem der Ansprüche 1 bis 30 erhaltenen Bitumen-Polymer-Zusammensetzungen zur Herstellung von Bitumen-Polymer-Bindemitteln, die in den genannten Zusammensetzungen bestehen, die als solche verwendet werden, oder durch Verdünnung der Bitumen-Polymer-Zusammensetzungen durch ein Bitumen oder Bitumengemisch oder durch eine Bitumen-Polymer-Zusammensetzung nach einem der Ansprüche 1 bis 30 bei geringeren Gehalten an Elastomer und Polymerzusatz gebildet werden, und insbesondere direkt oder nach Einbringen in eine wässerige Emulsion, zur Herstellung von Belägen und insbesondere von Straßenbelägen vom Typ einer Oberflächenbeschichtung, zur Fertigung von warm oder kalt aufgebrachten Straßendecken oder auch zur Herstellung von Dichtungsschürzen verwendbar sind.

**32.** Polymer-Mutterlauge, die insbesondere zur Herstellung von Bitumen-Polymer-Zusammensetzungen verwendbar ist, enthaltend (i) ein Kohlenwasserstofföl, das einen Destillationsbereich unter Atmosphärendruck, bestimmt gemäß der Norm ASTM D 86-67, zwischen 100 und 600°C aufweist, und, in diesem Öl gelöst, (ii) ein mit Schwefel vernetzbares Elastomer und (iii) ein schwefelspendendes Kupplungsmittel, dadurch **gekennzeichnet,** daß die Mutterlauge außerdem noch (iv) einen Polymerzusatz gelöst enthält, bestehend aus einem oder mehreren funktionalisierten olefinischen Polymeren, ausgewählt unter Copolymeren, die, bezogen auf das Gewicht, x % von Ethylen oder Propylen abgeleitete Struktur. elemente, y % von einem oder mehreren Monomeren A der Formel

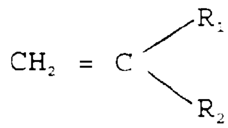

abgeleitete Strukturelemente, z % von wenigstens einem Monomer B der Formel

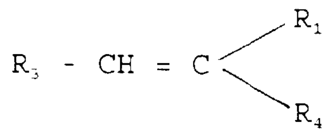

abgeleitete Strukturelemente und v % von einem oder mehreren Monomeren C abgeleitete Strukturelemente, die sich von den Monomeren A und B unterscheiden, enthalten, wobei in diesen Formeln $R_1$ H, $CH_3$ oder $C_2H_5$ und $R_2$ einen Rest $-COOR_5$, $-OR_5$ oder $-OOCR_6$ bezeichnen, wobei $R_6$ einen $C_{1-10}$-Alkylrest und $R_5$ H oder einen $C_{1-3}$-Alkylrest bedeuten, $R_3$ H, COOH oder $COOR_5$ bedeutet und $R_5$ die obige Bedeutung hat, $R_4$ einen Rest -COOH, -OH,

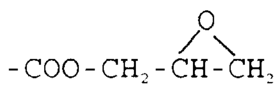 oder 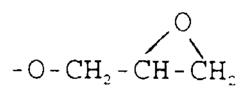

bedeutet und x, y, z und v Zahlenverhältnisse wie $40 \leq x \leq 99{,}7$, $0 \leq y \leq 50$, $0 \leq z \leq 20$ und $0 \leq v \leq 15$ bei $y + z \geq 0{,}3$ und $x + y + z + v = 100$ bedeuten.

**33.** Mutterlauge nach Anspruch 32, dadurch **gekennzeichnet,** daß in den Copolymeren, welche den Polymerzusatz zu bilden vermögen, x, y, z und v Zahlenverhältnisse wie $50 \leq x \leq 99{,}5$, $0 \leq y \leq 40$, $0 \leq z \leq 15$ und $0 \leq v \leq 10$ bei $y + z \geq 0{,}5$ und $x + y + z + v = 100$ bedeuten.

**34.** Mutterlauge nach Anspruch 32 oder 33, dadurch **gekennzeichnet**, daß die Monomere A, die in den funktionalisierten olefinischen Copolymeren Strukturelemente liefern, ausgewählt werden unter Vinylformiat, Vinylacetat, Vinylpropionat und Vinylbutyrat, Vinylethern $CH_2{=}CH{-}O{-}R_5$, Alkylacrylaten der Formel $CH_2{=}CH{-}COOR_5$ und Alkylmethacrylaten der Formel

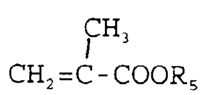

wobei $R_5$ einen $C_{1-10}$- und vorzugsweise $C_{1-6}$-Alkylrest und insbesondere Methyl, Ethyl, Propyl und Butyl bedeutet.

**35.** Mutterlauge nach einem der Ansprüche 32 bis 34, dadurch **gekennzeichnet,** daß die Monomere B, die in den funktionalisierten olefinischen Copolymeren Strukturelemente liefern, ausgewählt werden unter Maleinsäure und ihrem Anhydrid, Acrylsäure, Methacrylsäure, sauren Alkylmaleaten der Formel $HOOC{-}CH{=}CH{-}COOR_7$, worin $R_7$ einen $C_{1-6}$-Alkylrest bedeutet, Glycidylacrylat, Glycidylmethacrylat, Vinylalkohol oder Glycidylvinylether.

**36.** Mutterlauge nach einem der Ansprüche 32 bis 35, dadurch **gekennzeichnet,** daß die Monomere C, die in den funktionalisierten olefinischen Copolymeren Strukturelemente liefern, unter CO, $SO_2$ und Acrylnitril ausgewählt werden.

**37.** Mutterlauge nach einem der Ansprüche 32 bis 35, dadurch **gekennzeichnet,** daß die funktionalisierten olefinischen Copolymere ausgewählt werden aus der Gruppe, bestehend aus

(a) statistischen Ethylen-Vinylacetat-Copolymeren und statistischen Ethylen-Alkylacrylat- oder -methacrylat-Copolymeren mit einem $C_{1-6}$-Alkylrest, die, bezogen auf das Gewicht, 40 bis 99,7 % und vorzugsweise 50 bis 99 % Ethylen enthalten,
(b) statistischen Copolymeren aus Ethylen und einem Monomer B, ausgewählt unter Acryl-, Methacryl- und Maleinsäure oder Maleinsäureanhydrid, Glycidylacrylat und -methacrylat, die, bezogen auf das Gewicht, 80 bis 99,7 % und vorzugsweise 85 bis 99,5 % Ethylen enthalten,
(c) statistischen Terpolymeren aus Ethylen, einem Monomer A, ausgewählt unter Vinylacetat und Alkylacrylaten oder -methacrylaten mit einem $C_{1-6}$-Alkylrest, und einem Monomer B, ausgewählt unter Acryl-, Methacryl-, Maleinsäure oder Maleinsäureanhydrid, Glycidylacrylat und -methacrylat, die, bezogen auf das Gewicht, 0,5 bis 40 % vom Monomer A abgeleitete Strukturelemente und 0,5 bis 15 % vom Monomer B abgeleitete Strukturlemente enthalten, wobei der Rest auf von Ethylen abgeleitete Strukturelemente entfällt, und
(d) Copolymeren, die durch Aufpfropfen eines Monomers B, ausgewählt unter Acryl-, Methacryl- und Maleinsäure oder Maleinsäureanhydrid, Glycidylacrylat und -methacrylat, auf ein Substrat, bestehend aus einem Polymer, ausgewählt unter Polyethylenen, insbesondere unter Hochdruckpolyethylenen, Polypropylenen und den unter (a) definierten statistischen Copolymeren erhalten werden, wobei diese Pfropfpolymere 0,5 bis 15 Gew.-% vom Monomer B abgeleitete, aufgepfropfte Strukturelemente enthalten.

**38.** Mutterlauge nach Anspruch 37, dadurch **gekennzeichnet,** daß die funktionalisierten olefinischen Copolymere ausgewählt werden unter

(i) statistischen Terpolymeren aus Ethylen, Alkylacrylat oder -methacrylat mit einem $C_{1-6}$-Alkylrest und Maleinsäureanhydrid, die 0,5 bis 40 Gew.-% von Alkylacrylat oder -methacrylat abgeleitete Strukturlemente und 0,5 bis 15 Gew.-% von Maleinsäureanhydrid abgeleitete Strukturelemente enthalten, wobei der Rest auf von Ethylen abgeleitete Strukturelemente entfällt,
(ii) statistischen Terpolymeren aus Ethylen, Alkylacrylat oder -methacrylat mit einem $C_{1-6}$-Alkylrest und Glycidylacrylat oder -methacrylat, die 0,5 bis 40 Gew.-% von Alkylacrylat oder -methacrylat abgeleitete Strukturelemente und 0,5 bis 15 Gew.-% von Glycidylacrylat oder -methacrylat abgeleitete Strukturelemente enthalten, wobei der Rest auf von Ethylen abgeleitete Strukturelemente entfällt, und
(iii) mit Maleinsäureanhydrid gepfropften Hochdruckpolyethylenen und mit Maleinsäureanhydrid gepfropften Polypropylenen, die 0,5 bis 15 Gew.-% von Maleinsäureanhydrid abgeleitete gepfropfte Strukturelemente enthalten.

**39.** Mutterlauge nach einem der Ansprüche 32 bis 38, dadurch **gekennzeichnet,** daß der Polymerzusatz dadurch gebildet wird, daß man ein funktionalisiertes olefinisches Copolymer, das Strukturelemente mit funktionellen -COOH- oder -OH-Gruppen umfaßt, mit einem funktionalisierten olefinischen Copolymer, das Strukturelemente mit funktionellen Glycidylgruppen umfaßt, verbindet.

**40.** Mutterlauge nach einem der Ansprüche 32 bis 39, dadurch **gekennzeichnet,** daß das mit Schwefel vernetzbare Elastomer ausgewählt wird unter statistischen Copolymeren oder Blockcopolymeren aus Styrol und einem konjugierten Dien, wobei dieses insbesondere Butadien, Isopren, Chloropren, carboxyliertes Butadien oder carboxyliertes Isopren ist.

**41.** Mutterlauge nach Anspruch 40, dadurch **gekennzeichnet,** daß das Copolymer aus Styrol und konjugiertem Dien 5 bis 50 Gew.-% Styrol enthält.

**42.** Mutterlauge nach Anspruch 40 oder 41, dadurch **gekennzeichnet,** daß die gewichtsmäßige Durchschnittsmolekularmasse des Copolymers aus Styrol und konjugiertem Dien 10.000 bis 600.000 und vorzugsweise 30.000 bis 400.000 Dalton beträgt.

**43.** Mutterlauge nach einem der Ansprüche 32 bis 42, dadurch **gekennzeichnet,** daß das schwefelspendende Kupplungsmittel ausgewählt wird aus der Gruppe, bestehend aus elementarem Schwefel, Kohlenwasserstoffpolysulfiden, schwefelspendenden Vulkanisationsbeschleunigern, Gemischen dieser Produkte untereinander und/oder mit nichtschwefelspendenden Vulkanisationsbeschleunigern.

**44.** Mutterlauge nach Anspruch 43, dadurch **gekennzeichnet,** daß das schwefelspendende Kupplungsmittel ausgewählt wird unter Produkten M, die 0 bis 100 Gew.-% einer Komponente CA, bestehend aus einem oder mehreren schwefelspendenden Vulkanisationsbeschleunigern, und 100 bis 0 Gew.-% einer Komponente CB, bestehend aus einem oder mehreren Vulkanisationsmitteln, ausgewählt unter elementarem Schwefel und Kohlenwasserstoffpolysulfiden, enthalten, und Produkten N, die eine Komponente CC, bestehend aus einem oder mehreren nichtschwefelspendenden Vulkanisationsbeschleunigern und einem Produkt M, bei einem Gewichtsverhältnis der Komponente CC zum Produkt M von 0,01 bis 1 und vorzugsweise von 0,05 bis 0,5 enthalten.

**45.** Mutterlauge nach einem der Ansprüche 32 bis 44, dadurch **gekennzeichnet,** daß das Kohlenwasserstofföl einen Destillationsbereich bei Atmosphärendurck von 150 bis 400°C aufweist.

**46.** Mutterlauge nach einem der Ansprüche 32 bis 45, dadurch **gekennzeichnet,** daß das Kohlenwasserstofföl unter Erdölfraktionen von aromatischem, naphthen-aromatischem, naphthen-paraffinischem sowie von paraffinischem

Charakter, Steinkohlenölen und Pflanzenölen ausgewählt wird.

**47.** Mutterlauge nach einem der Ansprüche 32 bis 46, dadurch **gekennzeichnet,** daß die Mutterlauge, bezogen auf das Gewicht des Kohlenwasserstofföls, 5 bis 30 % mit Schwefel vernetzbares Elastomer, 1 bis 20 % Polymerzusatz und 0,005 bis 6 % Kupplungsmittel enthält.

### Claims

**1.** Process for the preparation of bitumen/polymer compositions having improved mechanical properties, wherein, while operating at temperatures of between 100°C and 230°C and with agitation for a period of at least 10 minutes, a bitumen or mixture of bitumens is brought into contact with, by weight of the bitumen, between 0.3% and 20% of an elastomer cross-linkable with sulphur and a sulphur-yielding coupling agent in an amount capable of providing an amount of free sulphur representing from 0.1% to 20% of the weight of the polymer cross-linkable with sulphur in the reaction medium containing the ingredients bitumen, elastomer and coupling agent, the process being characterised in that, during the bringing into contact, the reaction medium also contains, by weight of the bitumen, from 0.05% to 15% of a polymer adjuvant comprising one or more functionalised olefinic polymers selected from the copolymers containing, by weight, x % of units derived from ethylene or propylene, y % of units derived from one or more monomers A of formula

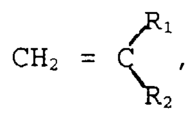

z % of units derived from at least one monomer B of formula

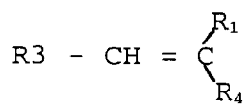

and v % of units derived from one or more monomers C other than the monomers A and B, with, in those formulae, $R_1$ denoting H, $CH_3$ or $C_2H_5$, $R_2$ representing a $-COOR_5$, $-OR_5$ or $-OOCR_6$ radical with $R_5$ denoting a $C_1$ to $C_{10}$ alkyl radical and $R_6$ representing H or a $C_1$ to $C_3$ alkyl radical, $R_3$ denoting H, COOH or $COOR_5$, $R_5$ having the meaning given above, and $R_4$ denoting a -COOH, -OH,

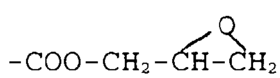

or

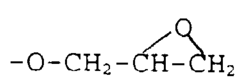

radical and x, y, z and v being numbers such that $40 \leq x \leq 99.7$, $0 \leq y \leq 50$, $0 \leq z \leq 20$ and $0 \leq v \leq 15$ with $y + z \geq 0.3$ and $x + y + z + v = 100$.

**2.** Process according to claim 1, characterised in that, in the copolymers capable of constituting the polymer adjuvant, x, y, z and v are such that $50 \leq x \leq 99.5$, $0 \leq y \leq 40$, $0 \leq z \leq 15$ and $0 \leq v \leq 10$ with $y + z \geq 0.5$ and $x + y + z + v = 100$.

**3.** Process according to claim 1 or 2, characterised in that the polymer adjuvant is present in the reaction medium in an amount representing from 0.1% to 10% by weight of the bitumen.

**4.** Process according to any one of claims 1 to 3, characterised in that the monomers A, which provide units in the functionalised olefinic copolymers, are selected from vinyl formate, vinyl acetate, vinyl propionate, vinyl butyrate, the vinyl ethers $CH_2 = CH\text{-}O\text{-}R_5$, the alkyl acrylates of formula $CH_2 = CH\text{-}COOR_5$, and the alkyl methacrylates of formula

$$CH_2 = C(CH_3)-COOR_5,$$

$R_5$ denoting a $C_1$ to $C_{10}$ and preferably a $C_1$ to $C_6$ alkyl radical, especially methyl, ethyl, propyl, butyl.

**5.** Process according to any one of claims 1 to 4, characterised in that the monomers B, which provide units in the functionalised olefinic copolymers, are selected from maleic acid and its anhydride, acrylic acid, methacrylic acid, alkyl acid maleates of formula HOOC-CH = CH-$COOR_7$ where $R_7$ is a $C_1$ to $C_6$ alkyl radical, glycidyl acrylate, glycidyl methacrylate, vinyl alcohol and glycidyl vinyl ether.

**6.** Process according to any one of claims 1 to 5, characterised in that the monomers C, which provide units in the functionalised olefinic copolymers, are selected from CO, $SO_2$, acrylonitrile.

**7.** Process according to any one of claims 1 to 5, characterised in that the functionalised olefinic copolymers are selected from the group consisting of:

(a) the random copolymers of ethylene and vinyl acetate and the random copolymers of ethylene and alkyl acrylate or methacrylate, with the alkyl residue containing from 1 to 6 carbon atoms, which contain, by weight, from 40% to 99.7% and preferably from 50% to 99% of ethylene;
(b) the random copolymers of ethylene and a monomer selected from acrylic acid, methacrylic acid, maleic acid or its anhydride, glycidyl acrylate and glycidyl methacrylate, which contain, by weight, from 80% to 99.7% and preferably from 85% to 99.5% of ethylene;
(c) the random terpolymers of ethylene, a monomer A selected from vinyl acetate and the alkyl acrylates or methacrylates, with the alkyl residue containing from 1 to 6 carbon atoms, and a monomer B selected from acrylic acid, methacrylic acid, maleic acid or its anhydride, glycidyl acrylate and glycidyl methacrylate, which contain, by weight, from 0.5% to 40% of units derived from monomer A and from 0.5% to 15% of units derived from monomer B, the remainder being formed by units derived from ethylene; and
(d) the copolymers resulting from the grafting of a monomer B selected from acrylic acid, methacrylic acid, maleic acid or its anhydride, glycidyl acrylate and glycidyl methacrylate, onto a substrate comprising a polymer selected from the polyethylenes, especially low-density polyethylenes, the polypropylenes and the random copolymers defined under (a), the grafted copolymers containing, by weight, from 0.5% to 15% of grafted units derived from monomer B.

**8.** Process according to claim 7, characterised in that the functionalised olefinic copolymers are selected from:

(i) the random terpolymers of ethylene, alkyl acrylate or methacrylate, with the alkyl residue containing from 1 to 6 carbon atoms, and maleic anhydride, which contain, by weight, from 0.5% to 40% of units derived from alkyl acrylate or methacrylate and from 0.5% to 15% of units derived from maleic anhydride, the remainder being formed by units derived from ethylene;
(ii) the random terpolymers of ethylene, alkyl acrylate or methacrylate, with the alkyl residue containing from 1 to 6 carbon atoms, and glycidyl acrylate or methacrylate, which contain, by weight, from 0.5% to 40% of units derived from alkyl acrylate or methacrylate and from 0.5% to 15% of units derived from glycidyl acrylate or methacrylate, the remainder being formed by units derived from ethylene; and
(iii) the maleic anhydride grafted low-density polyethylenes and the maleic anhydride grafted polypropylenes, which contain, by weight, from 0.5% to 15% of grafted units derived from maleic anhydride.

**9.** Process according to any one of claims 1 to 8, characterised in that the polymer adjuvant is formed by associating a functionalised olefinic copolymer comprising units having -COOH or -OH functional groups with a functionalised olefinic copolymer comprising units having glycidyl functional groups.

**10.** Process according to any one of claims 1 to 9, characterised in that the olefinic copolymers used to form the polymer adjuvant have a fluidity index, determined in accordance with the ASTM standard D 1238, having a value, expressed in g per 10 minutes, of between 0.3 and 3000 and preferably between 0.5 and 90'0.

**11.** Process according to any one of claims 1 to 10, characterised in that the bitumen or mixture of bitumens is selected from bitumens having a kinematic viscosity at 100°C of between 0.5 x $10^{-4}$ $m^2/s$ and 3 x $10^{-2}$ $m^2/s$ and preferably

between $1 \times 10^{-4}$ $m^2/s$ and $2 \times 10^{-2}$ $m^2/s$.

**12.** Process according to claim 11, characterised in that the bitumen or mixture of bitumens has a penetrability at 25°C, defined in accordance with the NF standard T 66004, of between 5 and 800 and preferably between 10 and 400.

**13.** Process according to any one of claims 1 to 12, characterised in that the amount of elastomer cross-linkable with sulphur represents from 0.5% to 10% of the weight of the bitumen.

**14.** Process according to any one of claims 1 to 13, characterised in that the elastomer cross-linkable with sulphur is selected from the random or block copolymers of styrene and a conjugated diene, the diene being especially such as butadiene, isoprene, chloroprene, carboxylated butadiene and carboxylated isoprene.

**15.** Process according to claim 14, characterised in that the copolymer of styrene and conjugated diene contains, by weight, from 5% to 50% of styrene.

**16.** Process according to claim 14 or 15, characterised in that the average molecular mass by weight of the copolymer of styrene and conjugated diene is between 10,000 and 600,000 daltons and preferably between 30,000 and 400,000 daltons.

**17.** Process according to any one of claims 1 to 16, characterised in that the sulphur-yielding coupling agent is selected from the group formed by elemental sulphur, hydrocarbyl polysulphides, sulphur-yielding vulcanisation accelerators, mixtures of such products with one another and/or with vulcanisation accelerators that do not yield sulphur.

**18.** Process according to claim 17, characterised in that the sulphur-yielding coupling agent is selected from the products M, which contain, by weight, from 0% to 100% of a component CA comprising one or more sulphur-yielding vulcanisation accelerators and from 100% to 0% of a component CB comprising one or more vulcanisation agents selected from elemental sulphur and hydrocarbyl polysulphides, and the products N, which contain a component CC comprising one or more vulcanisation accelerators that do not yield sulphur and a product M in a ratio by weight of the component CC to the product M of from 0.01 to 1 and preferably from 0.05 to 0.5.

**19.** Process according to any one of claims 1 to 18, characterised in that the reaction medium giving rise to the bitumen/polymer compositions is formed by first of all producing a mixture containing bitumen or a mixture of bitumens and the elastomer cross-linkable with sulphur, then incorporating in that mixture the coupling agent and, simultaneously or subsequently, the polymer adjuvant.

**20.** Process according to any one of claims 1 to 18, characterised in that the reaction medium giving rise to the bitumen/polymer compositions is formed by producing a mixture containing bitumen or a mixture of bitumens, the elastomer cross-linkable with sulphur and the polymer adjuvant, then incorporating the sulphur-yielding coupling agent in the mixture obtained.

**21.** Process according to claim 20, characterised in that appropriate amounts of the elastomer cross-linkable with sulphur and of the polymer adjuvant are first of all brought into contact with the bitumen or mixture of bitumens, while operating at temperatures of between 100°C and 230°C, more especially between 120°C and 190°C, and with agitation, for a sufficient period, generally of the order of some tens of minutes to several hours, for example of the order of 30 minutes to 8 hours, to form a homogeneous mixture, then an appropriate amount of the coupling agent is incorporated in the mixture and the whole is maintained under agitation at temperatures of between 100°C and 230°C, more especially between 120°C and 190°C, which may or may not be identical with the temperatures at which the elastomer cross-linkable with sulphur and the polymer adjuvant are mixed with the bitumen or mixture of bitumens, for a period at least equal to 10 minutes and generally of from 10 minutes to 5 hours and more especially from 30 minutes to 180 minutes, to form a reaction product constituting the bitumen/polymer composition.

**22.** Process according to claim 21, characterised in that the polymer adjuvant is incorporated in the bitumen or mixture of bitumens before or after the elastomer cross-linkable with sulphur.

**23.** Process according to any one of claims 1 to 22, characterised in that the reaction medium giving rise to the bitumen/polymer compositions contains one or more additives capable of reacting with the functional groups of the copolymer(s) constituting the polymer adjuvant, the reactive additives being especially primary or secondary amines, especially polyamines, alcohols, especially polyols, acids, especially polyacids, or also metal salts, especially compounds of metals of groups I, II, III and VIII of the Periodic Table of Elements.

**24.** Process according to claim 23, characterised in that the amount of reactive additive(s) incorporated in the reaction medium giving rise to the bitumen/polymer compositions represents from 0.01% to 10% and preferably from 0.05% to 5% of the weight of the bitumen.

**25.** Process according to any one of claims 1 to 24, characterised in that from 1% to 40% and more especially from 2% to 30%, by weight of the bitumen or mixture of bitumens, of a fluxing agent is added to the reaction medium giving rise to the bitumen/polymer compositions, at any time during its formation.

**26.** Process according to claim 25, characterised in that the fluxing agent comprises a hydrocarbon oil having a distillation range at atmospheric pressure, determined in accordance with the ASTM standard D 86-67, of between 100°C and 600°C and more especially between 150°C and 400°C.

**27.** Process according to claim 26, characterised in that the hydrocarbon oil is selected from petroleum fractions of aromatic nature, petroleum fractions of naphtheno-aromatic nature, petroleum fractions of naphtheno-paraffinic nature, petroleum fractions of paraffinic nature, coal oils and oils of plant origin.

**28.** Process according to claim 26 or 27, characterised in that the elastomer cross-linkable with sulphur, the polymer adjuvant and the coupling agent are incorporated in the bitumen or mixture of bitumens in the form of a mother liquor of those products in the hydrocarbon oil constituting the fluxing agent.

**29.** Process according to claim 28, characterised in that the mother liquor contains, by weight of the hydrocarbon oil, from 5% to 30% of elastomer cross-linkable with sulphur, from 1% to 20% of polymer adjuvant and from 0.005% to 6% of coupling agent.

**30.** Process according to claim 28 or 29, characterised in that the mother liquor is mixed with the bitumen or mixture of bitumens, while operating at temperatures of between 100°C and 230°C, more especially between 120°C and 190°C, and with agitation, then the resulting mixture is maintained under agitation at temperatures of between 100°C and 230°C, more especially between 120°C and 190°C, for a period at least equal to 10 minutes and generally of from 10 minutes to 90 minutes, to form a reaction product constituting the bitumen/polymer composition.

**31.** Application of the bitumen/polymer compositions obtained by the process according to any one of claims 1 to 30 to the production of bitumen/polymer binders, the binders comprising the compositions used as such or being formed by dilution of the bitumen/polymer compositions by a bitumen or mixture of bitumens or by a bitumen/polymer composition according to any one of claims 1 to 30 having lower contents of elastomer and polymer adjuvant, which bitumen/polymer binders are especially usable, directly or after being converted into an aqueous emulsion, in the production of coverings, especially road coverings of the surface coating type, in the production of coatings put in place in the hot or cold state, or in the production of sealing coverings.

**32.** Mother liquor of polymers, usable especially for the preparation of bitumen/polymer compositions, comprising (i) a hydrocarbon oil which has a distillation range at atmospheric pressure, determined in accordance with the ASTM standard D 86-67, of between 100°C and 600°C, and, in solution in that oil, (ii) an elastomer cross-linkable with sulphur and (iii) a sulphur-yielding coupling agent, characterised in that the mother liquor also contains, in solution, (iv) a polymer adjuvant comprising one or more functionalised olefinic polymers selected from the copolymers containing, by weight, x % of units derived from ethylene or propylene, y % of units derived from one or more monomers A of formula

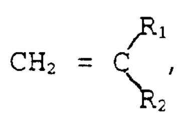

z % of units derived from at least one monomer B of formula

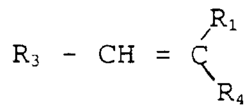

and v % of units derived from one or more monomers C different from the monomers A and B, with, in those formulae, $R_1$ denoting H, $CH_3$ or $C_2H_5$, $R_2$ representing a $-COOR_5$, $-OR_5$ or $-OOCR_6$ radical with $R_5$ denoting a $C_1$ to $C_{10}$ alkyl radical and $R_6$ representing H or a $C_1$ to $C_3$ alkyl radical, $R_3$ denoting H, COOH or $COOR_5$, $R_5$ having the meaning given above, and $R_4$ denoting a -COOH, -OH,

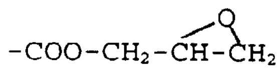 or 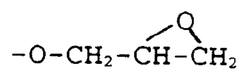

radical and x, y, z and v being numbers such that $40 \leq x \leq 99.7$, $0 \leq y \leq 50$, $0 \leq z \leq 20$ and $0 \leq v \leq 15$ with $y + z \geq 0.3$ and $x + y + z + v = 100$.

**33.** Mother liquor according to claim 32, characterised in that, in the copolymers capable of constituting the polymer adjuvant, x, y, z and v are such that $50 \leq x \leq 99.5$, $0 \leq y \leq 40$, $0 \leq z < 15$ and $0 \leq v \leq 10$ with $y + z \geq 0.5$ and $x + y + z + v = 100$.

**34.** Mother liquor according to claim 32 or 33, characterised in that the monomers A, which provide units in the functionalised olefinic copolymers, are selected from vinyl formate, vinyl acetate, vinyl propionate, vinyl butyrate, the vinyl ethers $CH_2=CH-O-R_5$, the alkyl acrylates of formula $CH_2=CH-COOR_5$, and the alkyl methacrylates of formula

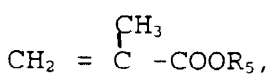

$R_5$ denoting a $C_1$ to $C_{10}$ and preferably a $C_1$ to $C_6$ alkyl radical, especially methyl, ethyl, propyl, butyl.

**35.** Mother liquor according to any one of claims 32 to 34, characterised in that the monomers B, which provide units in the functionalised olefinic copolymers, are selected from maleic acid and its anhydride, acrylic acid, methacrylic acid, alkyl acid maleates of formula $HOOC-CH=CH-COOR_7$ where $R_7$ is a $C_1$ to $C_6$ alkyl radical, glycidyl acrylate, glycidyl methacrylate, vinyl alcohol and glycidyl vinyl ether.

**36.** Mother liquor according to any one of claims 32 to 35, characterised in that the monomers C, which provide units in the functionalised olefinic copolymers, are selected from CO, $SO_2$, acrylonitrile.

**37.** Mother liquor according to any one of claims 32 to 35, characterised in that the functionalised olefinic copolymers are selected from:

(a) the random copolymers of ethylene and vinyl acetate and the random copolymers of ethylene and alkyl acrylate or methacrylate, with the alkyl residue containing from 1 to 6 carbon atoms, which contain, by weight, from 40% to 99.7% and preferably from 50% to 99% of ethylene;
(b) the random copolymers of ethylene and a monomer selected from acrylic acid, methacrylic acid, maleic acid or its anhydride, glycidyl acrylate and glycidyl methacrylate, which contain, by weight, from 80% to 99.7% and preferably from 85% to 99.5% of ethylene;
(c) the random terpolymers of ethylene, a monomer A selected from vinyl acetate and the alkyl acrylates or methacrylates, with the alkyl residue containing from 1 to 6 carbon atoms, and a monomer B selected from acrylic acid, methacrylic acid, maleic acid or its anhydride, glycidyl acrylate and glycidyl methacrylate, which contain, by weight, from 0.5% to 40% of units derived from monomer A and from 0.5% to 15% of units derived from monomer B, the remainder being formed by units derived from ethylene; and
(d) the copolymers resulting from the grafting of a monomer B selected from acrylic acid, methacrylic acid, maleic acid or its anhydride, glycidyl acrylate and glycidyl methacrylate, onto a substrate comprising a polymer selected from the polyethylenes, especially low-density polyethylenes, the polypropylenes and the random copolymers defined under (a), the grafted copolymers containing, by weight, from 0.5% to 15% of grafted units

derived from monomer B.

**38.** Mother liquor according to claim 37, characterised in that the functionalised olefinic copolymers are selected from:

(i) the random terpolymers of ethylene, alkyl acrylate or methacrylate, with the alkyl residue containing from 1 to 6 carbon atoms, and maleic anhydride, which contain, by weight, from 0.5% to 40% of units derived from alkyl acrylate or methacrylate and from 0.5% to 15% of units derived from maleic anhydride, the remainder being formed by units derived from ethylene;
(ii) the random terpolymers of ethylene, alkyl acrylate or methacrylate, with the alkyl residue containing from 1 to 6 carbon atoms, and glycidyl acrylate or methacrylate, which contain, by weight, from 0.5% to 40% of units derived from alkyl acrylate or methacrylate and from 0.5% to 15% of units derived from glycidyl acrylate or methacrylate, the remainder being formed by units derived from ethylene; and
(iii) the maleic anhydride grafted low-density polyethylenes and the maleic anhydride grafted polypropylenes, which contain, by weight, from 0.5% to 15% of grafted units derived from maleic. anhydride.

**39.** Mother liquor according to any one of claims 32 to 38, characterised in that the polymer adjuvant is formed by associating a functionalised olefinic copolymer comprising units having -COOH or -OH functional groups with a functionalised olefinic copolymer comprising units having glycidyl functional groups.

**40.** Mother liquor according to any one of claims 32 to 39, characterised in that the elastomer cross-linkable with sulphur is selected from the random or block copolymers of styrene and a conjugated diene, the diene being especially such as butadiene, isoprene, chloroprene, carboxylated butadiene and carboxylated isoprene.

**41.** Mother liquor according to claim 40, characterised in that the copolymer of styrene and conjugated diene contains, by weight, from 5% to 50% of styrene.

**42.** Mother liquor according to claim 40 or 41, characterised in that the average molecular mass by weight of the copolymer of styrene and conjugated diene is between 10,000 and 600,000 daltons and preferably between 30,000 and 400,000 daltons.

**43.** Mother liquor according to any one of claims 32 to 42, characterised in that the sulphur-yielding coupling agent is selected from the group formed by elemental sulphur, hydrocarbyl polysulphides, sulphur-yielding vulcanisation accelerators, mixtures of such products with one another and/or with vulcanisation accelerators that do not yield sulphur.

**44.** Mother liquor according to claim 43, characterised in that the sulphur-yielding coupling agent is selected from the products M, which contain, by weight, from 0% to 100% of a component CA comprising one or more sulphur-yielding vulcanisation accelerators and from 100% to 0% of a component CB comprising one or more vulcanisation agents selected from elemental sulphur and hydrocarbyl polysulphides, and the products N, which contain a component CC comprising one or more vulcanisation accelerators that do not yield sulphur and a product M in a ratio by weight of the component CC to the product M of from 0.01 to 1 and preferably from 0.05 to 0.5.

**45.** Mother liquor according to any one of claims 32 to 44, characterised in that the hydrocarbon oil has a distillation range at atmospheric pressure of between 150°C and 400°C.

**46.** Mother liquor according to any one of claims 32 to 45, characterised in that the hydrocarbon oil is selected from petroleum fractions of aromatic nature, petroleum fractions of naphtheno-aromatic nature, petroleum fractions of naphtheno-paraffinic nature, petroleum fractions of paraffinic nature, coal oils and oils of plant origin.

**47.** Mother liquor according to any one of claims 32 to 46, characterised in that it contains, by weight of the hydrocarbon oil, from 5% to 30% of elastomer cross-linkable with sulphur, from 1% to 20% of polymer adjuvant and from 0.005% to 6% of sulphur-yielding coupling agent.